(19) Europäisches Patentamt
European Patent Office
Office européen des brevets

(11) **EP 4 478 638 A1**

(12) **EUROPEAN PATENT APPLICATION**
published in accordance with Art. 153(4) EPC

(43) Date of publication:
**18.12.2024 Bulletin 2024/51**

(21) Application number: **23753206.4**

(22) Date of filing: **10.02.2023**

(51) International Patent Classification (IPC):
*H04L 1/18* (2023.01)   *H04L 5/00* (2006.01)
*H04W 72/21* (2023.01)   *H04W 72/23* (2023.01)
*H04W 4/06* (2009.01)

(52) Cooperative Patent Classification (CPC):
**H04L 1/18; H04L 5/00; H04W 4/06; H04W 72/21;
H04W 72/23**

(86) International application number:
**PCT/KR2023/001991**

(87) International publication number:
**WO 2023/153860 (17.08.2023 Gazette 2023/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.02.2022   KR 20220018310**

(71) Applicant: **LG Electronics Inc.**
**Yeongdeungpo-gu**
**Seoul 07336 (KR)**

(72) Inventors:
• **LEE, Youngdae**
  **Seoul 06772 (KR)**
• **YANG, Suckchel**
  **Seoul 06772 (KR)**
• **KIM, Seonwook**
  **Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **METHOD AND DEVICE FOR TRANSMITTING/RECEIVING HARQ-ACK INFORMATION IN WIRELESS COMMUNICATION SYSTEM**

(57)    A method and a device for transmitting/receiving HARQ-ACK information in a wireless communication system are disclosed. A method according to one embodiment of the present disclosure may comprise the steps of: receiving configuration information related to a PUCCH from a base station, wherein the configuration information includes information about a list of PUCCH resources for unicast SPS PDSCHs; receiving the unicast SPS PDSCHs and multicast PDSCHs from the base station; and transmitting the PUCCH to the base station.

**FIG.7**

Receive configuration information related to a PUCCH — S701

Receive unicast SPS PDSCH(s) and multicast PDSCH(s) — S702

Transmit a PUCCH — S703

EP 4 478 638 A1

**Description**

[Technical Field]

The present disclosure relates to a wireless communication system, and in more detail, relates to a method and an apparatus for transmitting and receiving HARQ-ACK (hybrid automatic repeat request-acknowledgement) information in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and an apparatus for transmitting one or more HARQ (Hybrid Automatic Repeat and request)-ACK (acknowledgement) information.

A technical object of the present disclosure is to provide a method and an apparatus for multiplexing and transmitting/receiving HARQ-ACK information for unicast PDSCH (physical downlink shared channel)(s) and HARQ-ACK information for multicast PDSCH(s).

The technical objects to be achieved by the present disclosure are not limited to the above-described technical objects, and other technical objects which are not described herein will be clearly understood by those skilled in the pertinent art from the following description.

[Technical Solution]

A method performed by a user equipment (UE) in a wireless communication system according to an aspect of the present disclosure may include: receiving, from a base station, configuration information related to a PUCCH (physical uplink control channel), wherein the configuration information includes information on a list of PUCCH resources for unicast semi-persistent scheduling (SPS) physical downlink shared channels (PDSCHs); receiving, from the base station, the unicast SPS PDSCHs and multicast PDSCHs; and transmitting the PUCCH to the base station. Based on first HARQ (hybrid automatic repeat request)-ACK (acknowledgement) information associated with the unicast SPS PDSCHs and second HARQ-ACK information associated with the multicast PDSCHs being reported within one slot, a PUCCH resource for the PUCCH may be determined from the list of PUCCH resources to multiplex the first HARQ-ACK information and the second HARQ-ACK information within the PUCCH, and based on a total payload size including the first HARQ-ACK information and the second HARQ-ACK information exceeding a maximum payload size for the PUCCH resource, the first HARQ-ACK information may be included in the PUCCH with priority over the second HARQ-ACK information.

A method performed by a base station in a wireless communication system according to an additional aspect of the present disclosure may include: transmitting, to a user equipment (UE), configuration information related to a PUCCH (physical uplink control channel), wherein the configuration information includes information on a list of PUCCH resources for unicast semi-persistent scheduling (SPS) physical downlink shared channels (PDSCHs); transmitting, to the UE, the unicast SPS PDSCHs and multicast PDSCHs; and receiving the PUCCH to the UE. Based on first HARQ (hybrid automatic repeat request)-ACK (acknowledgement) information associated with the unicast SPS PDSCHs and second HARQ-ACK information associated with the multicast PDSCHs being reported within one slot, a PUCCH resource for the PUCCH may be determined from the list of PUCCH resources to multiplex the first HARQ-ACK information and the second HARQ-ACK information within the PUCCH, and based on a total payload size including the first HARQ-ACK information and the second HARQ-ACK information exceeding a maximum payload size for the PUCCH resource, the first HARQ-ACK information may be included in the PUCCH with priority over the second HARQ-ACK information.

[Technical Effects]

According to an embodiment of the present disclosure, when transmitting one or more HARQ-ACKs, ambiguity can be prevented so that a base station can accurately interpret HARQ-ACK information.

In addition, according to an embodiment of the present disclosure, when multiplexing HARQ-ACK information for a unicast PDSCH and HARQ-ACK information for a multicast PDSCH, since the maximum payload size for a unicast PUCCH resource is not exceeded, transmission and reception of HARQ-ACK information is possible using the unicast PUCCH resource.

In addition, according to an embodiment of the present disclosure, if a problem occurs in which the maximum payload size for a PUCCH resource does not support all HARQ-ACK information, HARQ-ACK information can be configured and transmitted and received according to a rule.

Effects achievable by the present disclosure are not limited to the above-described effects, and other effects which are not described herein may be clearly understood by those skilled in the pertinent art from the following description.

[Brief Description of the Drawings]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 is a diagram illustrating an operation of a UE for a HARQ-ACK transmission and reception method according to an embodiment of the present disclosure.
FIG. 8 is a diagram illustrating an operation of a base station for a HARQ-ACK transmission and reception method according to an embodiment of the present disclosure.
FIG. 9 is a diagram illustrating a signaling procedure between a network and a UE according to an embodiment of the present disclosure.
FIG. 10 illustrates a block diagram of a wireless communication device according to an embodiment of the present disclosure.

[Detailed Description]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition,"/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement

4

- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

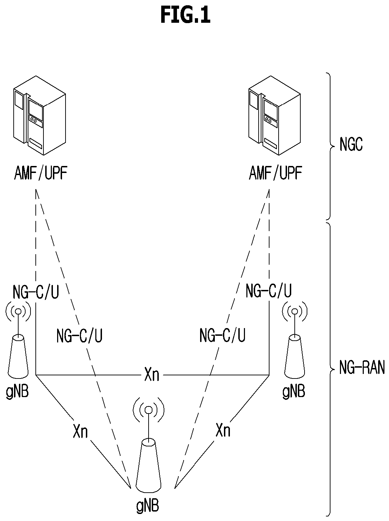

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

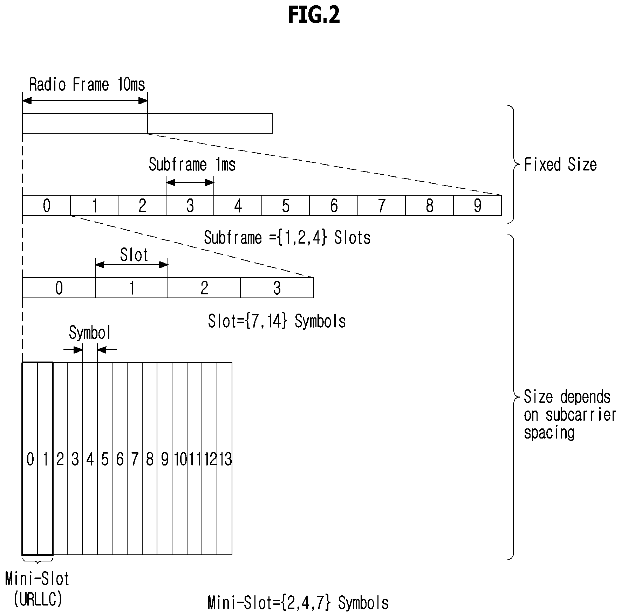

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is 480-103 Hz and $N_f$ is 4096. Downlink and uplink transmission is configured (organized) with a radio frame having a duration of $T_f = 1/(\Delta f_{max} N_f/100) \cdot T_c = 10$ms. Here, a radio frame is configured with 10 subframes having a duration of $T_{sf} = (\Delta f_{max} N_f/1000) \cdot T_c = 1$ms, respectively. In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration $\mu$, slots are numbered in an increasing order of $n_s^{\mu} \in \{0,..., N_{slot}^{subframe,\mu}-1\}$ in a subframe and are numbered in an increasing order of $n_{s,f}^{\mu} \in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu} N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on μ=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

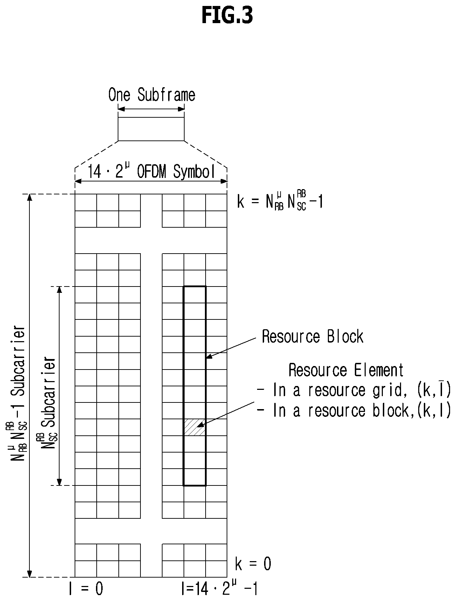

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k,l'). Here, $k=0,..., N_{RB}^{\mu}N_{sc}^{RB}-1$ is an index in a frequency domain and $l'=0,..., 2^{\mu}N_{symb}^{(\mu)}-1$ refers to a position of a symbol in a subframe. When referring to a resource element in a slot, an index pair (k,l) is used. Here, $l=0,..., N_{symb}^{\mu}-1$. A resource element (k,l') for μ and an antenna port p corresponds to a complex value, $a_{k,l'}^{(p,\mu)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radio-frequency channel number).

Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{\mu}$ and a resource element (k,l) for a subcarrier spacing configuration μ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

**【Equation 2】**

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

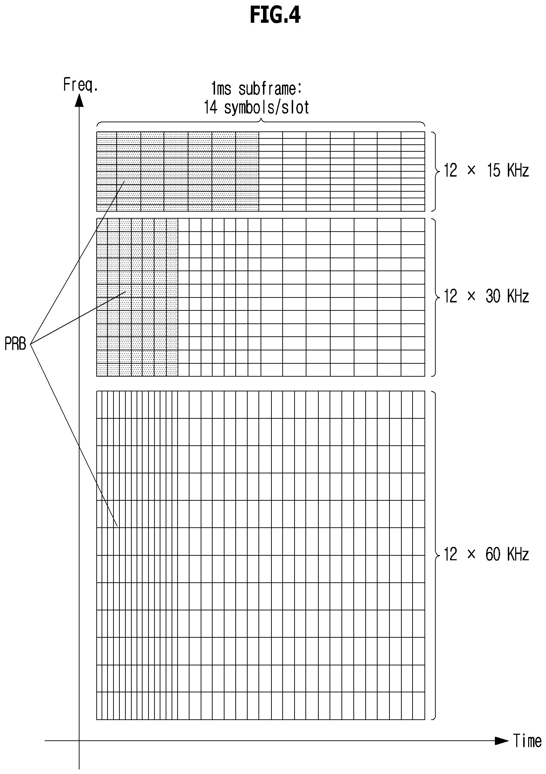

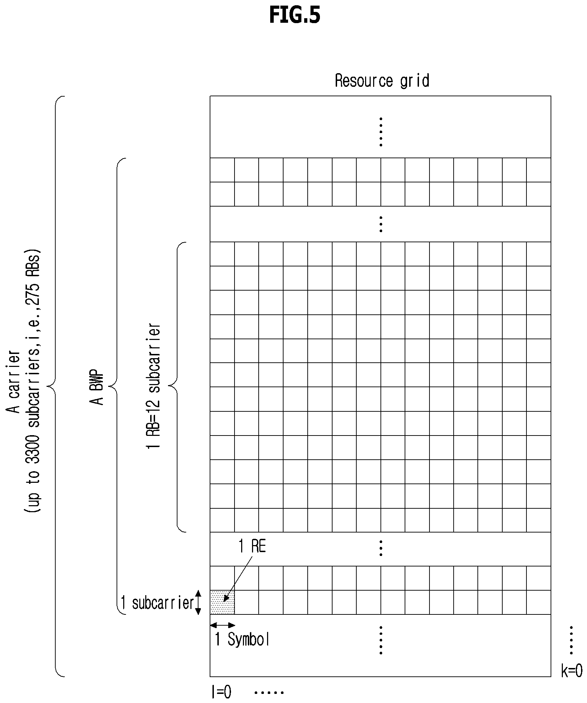

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

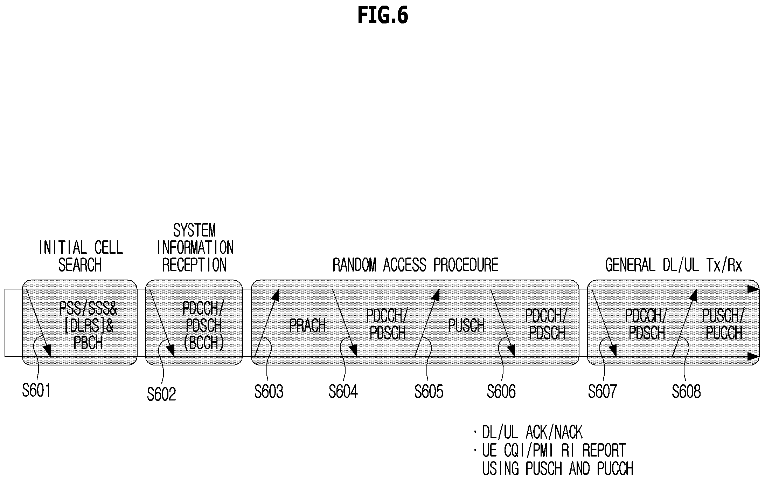

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Schedulinq of a PUSCH in one cell |
| 0_1 | Scheduling of one or multiple PUSCHs in one cell, or indication of cell group downlink feedback information to a UE |
| 0_2 | Schedulinq of a PUSCH in one cell |
| 1_0 | Schedulinq of a PDSCH in one DL cell |
| 1_1 | Schedulinq of a PDSCH in one cell |
| 1_2 | Schedulinq of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

MBMS(multimedia broadcast/multicast service) scheme

Hereinafter, the MBMS scheme of 3GPP LTE will be described. MBMS may include a single frequency network (SFN) scheme in which a plurality of base stations or a plurality of cells are synchronized to transmit the same data to a terminal, and a single cell point to multipoint (SC-PTM) scheme for broadcasting within the corresponding cell coverage through the PDCCH/PDSCH channel.

Here, SFN scheme may be used to provide a broadcast service to a wide area (e.g., MBMS area) through resources allocated semi-statically in advance, and SC-PTM scheme may be mainly used to provide a broadcast service only within a cell coverage through dynamic resources.

SC-PTM provides one logical channel, SC-MCCH (Single Cell Multicast Control Channel) and one or more logical channels SC-MTCH (Single Cell Multicast Traffic Channel). These logical channels (i.e., SC-MCCH and SC-MTCH) are mapped to the transport channel, DL-SCH, and the transport channel DL-SCH is mapped to the physical channel PDSCH. A PDSCH transmitting SC-MCCH or SC-MTCH data may be scheduled through a PDCCH indicated by a Group Radio Network Temporary Identifier (G-RNTI).

In this case, a temporary mobile group identify (TMGI) corresponding to the service ID may be mapped one-to-one with a specific G(group)-RNTI value. Accordingly, when the base station provides a plurality of services, a plurality of G-RNTI values may be allocated for SC-PTM transmission. One or a plurality of terminals may perform PDCCH monitoring by using a specific G-RNTI to receive a specific service.

And, for a specific service/specific G-RNTI, SC-PTM dedicated DRX on-duration section may be configured, and in this case, the UEs may wake up only for a specific on-duration period and perform PDCCH monitoring for the G-RNTI.

MBS (multicast broadcast service) based transmission / reception operation

The contents described below may be applied to PDCCH reception/PDSCH reception/PUCCH transmission for MBS in the serving cell, and the DCI format for scheduling PDSCH reception may be referred to as a multicast DCI format.

A UE may be provided one or more G-RNTIs for scrambling the CRC of multicast DCI formats for scheduling PDSCH receptions. The UE may be provided one G-CS-RNTI per SPS PDSCH configuration for scrambling the CRC of multicast DCI formats providing SPS PDSCH activation/release.

A UE may be configured by initialDownlinkBWP in DownlinkConfigCommonSIB a frequency resource for PDCCH and PDSCH receptions providing MCCH and MTCH (e.g., referrring to 3GPP TS 38.331). If the UE is not provided initialDownlinkBWP, the frequency resource is same as for the CORESET with index 0 that is associated with the Type0-PDCCH CSS set.

Referring to a higher layer parameter value provided by PDCCH-ConfigCommon or PDSCH-ConfigCommon, if the higher layer parameter value is provided by PDCCH-Config or PDSCH-Config in cfr-Config-MCCH-MTCH, the latter value is used for PDCCH receptions or PDSCH receptions, respectively.

A UE may monitor PDCCH for scheduling PDSCH receptions for MCCH or MTCH (e.g., referrring to 3GPP TS 38.213, clause 10.1).

A UE may be configured, per DL BWP by locationAndBandwidth-Multicast, a frequency resource within the DL BWP for PDCCH and PDSCH receptions (e.g., referrring to 3GPP TS 38.211).

Referring to a higher layer parameter value provided by PDCCH-Config or PDSCH-Config or SPS-Config, if the higher layer parameter value is provided by PDCCH-Config or PDSCH-Config or SPS-Config in cfr-Config-Multicast, the latter value is used for PDCCH receptions or PDSCH receptions, respectively.

Referring to a higher layer parameter value provided by a first or second PUCCH-Config, if the higher layer parameter value is provided by a first or second pucch-Config-Multicast1, or by a first or second pucch-Config-Multicast2, the latter value is used for PUCCH transmissions. In addition, referring to a higher layer parameter value provided by SPS-PUCCH-AN or SPS-PUCCH-AN-List, if the higher layer parameter value is provided by sps-PUCCH-AN-Multicast or by sps-PUCCH-AN-List-Multicast, respectively, the latter value is used for PUCCH transmissions. In addition, referring to a higher layer parameter value provided by pdsch-HARQ-ACK-Codebook or pdsch-HARQ-ACK-CodebookList, if the higher layer parameter value is provided by pdsch-HARQ-ACK-Codebook-Multicast or by pdsch-HARQ-ACK-Codebook-List-Multicast, respectively, the latter value is used for PUCCH transmissions.

A UE monitors PDCCH for scheduling PDSCH receptions or for activation/release of SPS PDSCH receptions for a corresponding SPS PDSCH configuration (e.g., referrring to 3GPP TS 38.213, clause 10.1).

If a UE is provided multiple G-RNTIs or G-CS-RNTIs, a configuration for a HARQ-ACK codebook type applies to all G-RNTIs or G-CS-RNTIs.

A UE indicating a capability to support first HARQ-ACK reporting mode and second HARQ-ACK reporting mode, may be configured by harq-Feedback-Option-Multicast to provide HARQ-ACK information for a transport block reception according to the first HARQ-ACK reporting mode reporting mode or according to the HARQ-ACK second reporting mode. The second HARQ-ACK reporting mode is not applicable for DCI formats having associated HARQ-ACK information without scheduling a PDSCH reception.

For the first HARQ-ACK reporting mode, the UE generates HARQ-ACK information with ACK value when a UE correctly decodes a transport block of detects a DCI format indicating an SPS PDSCH activation/release. Otherwise, the UE generates HARQ-ACK information with NACK value, (e.g., referrring to 3GPP TS 38.213, clauses 9 and 9.1 through 9.3).

For the second HARQ-ACK reporting mode, the UE does not transmit a PUCCH that would include only HARQ-ACK information with ACK values.

In relation to the methods proposed in the present disclosure, ACK/NACK-based HARQ-ACK may mean HARQ-ACK feedback/information/bit determined according to the first HARQ-ACK reporting mode. Additionally, NACK only based HARQ-ACK may mean HARQ-ACK feedback/information/bit determined according to the second HARQ-ACK reporting mode.

A PDSCH reception providing an initial transmission of a TB is scheduled only by a multicast DCI format. For the first HARQ-ACK reporting mode, a PDSCH reception providing a retransmission of the TB may be scheduled either by a multicast DCI format or by a unicast DCI format (e.g., referrring to 3GPP TS 38.214).

An activation or a release for SPS PDSCH receptions using a G-CS-RNTI for a corresponding SPS PDSCH configuration is provided by a multicast DCI format (e.g., referrring to 3GPP TS 38.213, in clause 10.2) by replacing CS-RNTI with the G-CS-RNTI. For the first HARQ-ACK reporting mode and for a TB that a UE received in a SPS PDSCH, a PDSCH reception providing a retransmission of the TB may be scheduled either by a unicast DCI format or by a multicast DCI format (e.g., referrring to 3GPP TS 38.214).

For the first HARQ-ACK reporting mode, a UE may be configured per G-RNTI to provide HARQ-ACK information by harq-FeedbackEnabler-Multicast. When the UE is not provided harq-FeedbackEnabler-Multicast for a G-RNTI, the UE does not provide HARQ-ACK information associated with the G-RNTI. When the UE indicates a capability for not generating HARQ-ACK information associated with a multicast DCI format and is provided harq-FeedbackEnabler-Multicast, the UE determines whether or not to provide the HARQ-ACK information based on an indication by the multicast DCI format.

For the second HARQ-ACK reporting mode, if a UE would multiplex HARQ-ACK information associated with multicast DCI formats and HARQ-ACK information associated with unicast DCI formats in a PUCCH, or with P/SP-CSI in a PUCCH, or in a PUSCH, the UE provides HARQ-ACK information according to the first HARQ-ACK reporting mode.

If a UE is provided pdsch-HARQ-ACK-Codebook = semi-static, the UE may generate a Type-1 HARQ-ACK codebook based on a pre-defined method (e.g., referrring to 3GPP TS 38.213, clauses 9.1.2 and 9.1.2.1.). If a UE is provided pdsch-HARQ-ACK-Codebook = dynamic, the UE may generate a Type-2 HARQ-ACK codebook based on a pre-defined method (e.g., referrring to 3GPP TS 38.213, clause 9.1.3.1).

A UE determines a PUCCH resource for a PUCCH transmission with HARQ-ACK information based on a pre-defined method (e.g., referrring to 3GPP TS 38.213, clauses 9.2 and 9.2.1 through 9.2.5). If the UE multiplexes HARQ-ACK information associated with unicast DCI formats and HARQ-ACK information associated with multicast DCI formats in a same PUCCH, the last DCI format that the UE uses to determine the PUCCH resource, may corresponds to a last unicast DCI format (e.g., referrring to 3GPP TS 38.213, clause 9.2.3).

Multiplexing method of HARQ-ACKs for a unicast SPS(semi-persistent scheduling) PDSCH and a multicast PDSCH

- PUCCH: Physical Uplink Control Channel
- PUSCH: Physical Uplink Shared Channel
- MCCH: Multicast Control Channel
- MTCH: Multicast Traffic Channel
- RRM: Radio resource management
- RLM: Radio link monitoring
- SCS: Sub-carrier spacing
- RLM: Radio link monitoring
- DCI: Downlink Control Information Information)
- CAP: Channel Access Procedure
- Ucell: Unlicensed cell
- PCell: Primary Cell
- PSCell: Primary SCG Cell
- TBS: Transport Block Size
- TDRA: Time Domain Resource Allocation
- SLIV: Starting and Length Indicator Value (Indicative value for a starting symbol index and the number of symbols in a slot of a PDSCH and/or a PUSCH. Elements of entries constituting a TDRA field in a PDCCH that schedules the corresponding PDSCH and/or PUSCH.)
- BWP: BandWidth Part (It may be composed of continuous resource blocks (RBs) on the frequency axis. It may correspond to one numerology (e.g., SCS, CP length, slot/mini-slot duration, etc.). In addition, multiple BWPs may be configured in one carrier (the number of BWPs per carrier may also be limited), but the number of activated BWPs may be limited to a part of them (e.g., 1) per carrier.

- CORESET: Control Resource Set (It means a time-frequency resource region in which PDCCH can be transmitted, and the number of CORESETs per BWP may be limited.)
- REG: Resource element group
- SFI: Slot Format Indicator (an indicator indicating symbol level DL/UL direction within a specific slot(s), transmitted via a group common PDCCH)
- COT: Channel occupancy time
- SPS: Semi-persistent scheduling
- QCL: Quasi-Co-Location (A QCL relationship between two reference signals (RS) may mean that a QCL parameter obtained from one RS such as a Doppler shift, a Doppler spread, an average delay, a delay spread, a spatial Rx parameter, etc. can also be applied to another RS (or antenna port(s) of a corresponding RS). In the NR system, 4 QCL types are defined as follows. 'typeA': {Doppler shift, Doppler spread, average delay, delay spread}, 'typeB': {Doppler shift, Doppler spread}, 'typeC': {Doppler shift, average delay}, 'typeD': {Spatial Rx parameter}. For certain DL RS antenna port(s), a first DL RS may be configured as a reference for QCL type X (X=A, B, C, or D), and a second DL RS may be configured as a reference for QCL type Y (Y=A, B, C, or D, but X≠Y).)
- TCI: Transmission Configuration Indication (One TCI state includes a QCL relationship between DM-RS ports of a PDSCH, DM-RS ports of a PDCCH, or CSI-RS port(s) of a CSI-RS resource and one or more DL RSs. For 'Transmission Configuration Indication' among fields in DCI that schedules a PDSCH, a TCI state index corresponding to each code point constituting the field is activated by a MAC control element (CE), and a TCI state configuration for each TCI state index is configured through RRC signaling. In the Rel-16 NR system, a corresponding TCI state is configured between DL RSs, but a configuration between a DL RS and a UL RS or between a UL RS and a UL RS may be allowed in a future release. Examples of a UL RS include an SRS, a PUSCH DM-RS, and a PUCCH DM-RS.)
- SRI: SRS resource indicator (It indicates one of SRS resource index values configured in 'SRS resource indicator' among fields in DCI scheduling a PUSCH. When transmitting a PUSCH, a UE may transmit the PUSCH using the same spatial domain transmission filter used for transmission and reception of a reference signal associated with the corresponding SRS resource. Here, a reference RS is configured by RRC signaling through an SRS spatial relation information parameter (SRS-SpatialRelationInfo) for each SRS resource, and an SS/PBCH block, a CSI-RS, or an SRS may be configured as the reference RS.)
- TRP: Transmission and Reception Point
- PLMN ID: Public Land Mobile Network identifier
- RACH: Random Access Channel
- RAR: Random Access Response
- Msg3: This is a message transmitted through an uplink shared channel (UL-SCH) including a C-RNTI MAC CE or a common control channel (CCCH) service data unit (SDU), provided from a higher layer, and associated with a UE Contention Resolution Identity as part of a random access procedure.
- Special Cell: In case of a dual connectivity operation, the term special cell refers to the PCell of a master cell group (MCG) or the PSCell of a secondary cell group (SCG) depending on whether a MAC entity is related to the MCG or the SCG, respectively. Otherwise, the term Special Cell refers to the PCell. The Special Cell supports PUCCH transmission and contention-based random access and is always active.
- Serving Cell: It includes the PCell, the PSCell, and the secondary cell (SCell).
- CG: Configured Grant
- Type 1 CG or Type 2 CG: Type 1 configured grant or Type 2 configured grant
- Fall-back DCI: It indicates a DCI format that can be used for a fall-back operation, and for example, corresponds to DCI formats 0_0 and 1_0.
- non-fall-back DCI: It indicates a DCI format other than the fall-back DCI, for example, corresponds to DCI formats 0_1 and 1_1.
- SS: search space
- FDRA: frequency domain resource allocation
- TDRA: time domain resource allocation
- LP, HP: Low(er) priority, High(er) priority
- A/N for cell A: A/N (acknowledgement/negative acknowledgment) information for data (e.g., PDSCH) received in cell A
- UL CI: Uplink cancelation indication
- CFR: Common frequency resource for multicast and broadcast service (MBS). One DL CFR provides group common PDCCH and group common PDSCH transmission resources for MBS transmission and reception. One UL CFR provides HARQ-ACK PUCCH resources for group common PDSCH reception. One CFR is one MBS specific BWP or one UE specific BWP. Alternatively, one or a plurality of CFRs may be configured in one UE specific BWP. One CFR is associated with one UE specific BWP.

- TMGI: Temporary Mobile Group Identity. As an MBS service identifier, it indicates a specific service.
- G-RNTI: Group Radio Network Temporary Identifier. It indicates a UE group identifier that receives an MBS.

The above contents (3GPP system, frame structure, NR system, etc.) can be applied in combination with methods proposed in the present disclosure to be described later, or it may be supplemented to clarify the technical characteristics of the methods proposed in the present disclosure. In this disclosure, '/' means 'and', 'or', or 'and/or' depending on the context.

In the prior art, a base station may configure a UE-specific SPS configuration for a specific UE and allocate a repeated downlink SPS transmission resource according to a configured period. Here, DCI of a UE-specific PDCCH may indicate activation (SPS activation) of a specific SPS configuration index, and accordingly, the corresponding UE can repeatedly receive an SPS transmission resource according to a configured period. This SPS transmission resource is used for initial HARQ (hybrid automatic repeat request) transmission, and a base station may allocate a retransmission resource of a specific SPS configuration index through DCI of a UE-specific PDCCH. For example, when a UE reports a HARQ NACK for an SPS transmission resource, a base station can allocate a retransmission resource to DCI so that a UE can receive downlink retransmission. In addition, DCI of a UE-specific PDCCH may indicate deactivation (SPS release or SPS deactivation) of a specific SPS configuration index, and a UE receiving this does not receive the indicated SPS transmission resource. Here, a cyclic redundancy check (CRC) of DCI for activation/retransmission/deactivation of the SPS is scrambled with Configured Scheduling-RNTI (CS-RNTI).

Rel-17 NR intends to introduce a DL broadcast or DL multicast transmission method to support a Multicast Broadcast Service (MBS) service similar to LTE MBMS. A base station provides a point-to-multipoint (PTM) transmission method and/or a point-to-point (PTP) transmission method for DL broadcast or DL multicast transmission.

In a PTM transmission method for an MBS, a base station transmits a group common PDCCH and a group common PDSCH to a plurality of UEs, and a plurality of UEs simultaneously receive the same group common PDCCH and group common PDSCH transmission to decode the same MBS data.

On the other hand, in a PTP transmission scheme for an MBS, a base station transmits a UE-specific PDCCH and a UE-specific PDSCH to a specific UE, and only the corresponding UE receives the UE-specific PDCCH and the UE-specific PDSCH. Here, when there are a plurality of UEs receiving the same MBS service, a base station separately transmits the same MBS data to individual UEs through different UE-specific PDCCHs and UE-specific PDSCHs. That is, the same MBS data is provided to a plurality of UE, but different channels (i.e., PDCCH, PDCCH) are used for each UE.

As described above, in a PTM transmission method, a base station transmits a plurality of group common PDSCHs to a plurality of UEs. Here, a base station can receive UE's HARQ-ACKs for a group common PDSCH through a UE-specific PUCCH resource from a plurality of UEs.

Here, when a transport block (TB) for a multicast PDSCH (or group common PDSCH) is successfully decoded, a UE transmits an ACK as HARQ-ACK information. On the other hand, if a transport block (TB) is not successfully decoded, a UE transmits a NACK as HARQ-ACK information. This HARQ-ACK transmission method is referred to as an ACK/NACK based HARQ-ACK method (mode). In general, a UE may transmit an ACK/NACK based HARQ-ACK using a UE-specific PUCCH resource.

On the other hand, when a NACK only based HARQ-ACK method (mode) is configured for a multicast PDSCH (or group common PDSCH), a UE does not perform PUCCH transmission in case of an ACK and a UE perform PUCCH transmission in case of a NACK. Here, a PUCCH is a group common PUCCH resource, and only NACK can be transmitted as HARQ-ACK information.

Hereinafter, in the present disclosure, a DCI format (or PDCCH) for scheduling reception of a PDSCH carrying an MBS service (i.e., MBS TB) may be referred to as an MBS DCI format (or PDCCH) or a multicast DCI format (or PDCCH). For example, a DCI format (or PDCCH) with a CRC scrambled by a G-RNTI (group-RNTI) or a G-CS-RNTI ((group-configured scheduling-RNTI) scheduling PDSCH reception may be referred to as an MBS DCI format (or PDCCH) or a multicast DCI format (or PDCCH). Here, unless otherwise described in the present disclosure, an MBS DCI format (or PDCCH) or a multicast DCI format (or PDCCH) may include both a group common DCI format (or PDCCH) according to a PTM method for an MBS and a UE specific DCI format (or PDCCH) according to a PTP method for an MBS.

In addition, unless otherwise described in the present disclosure (e.g., distinction between a PDSCH by dynamic scheduling and a PDSCH by SPS), a PDSCH scheduled by an MBS DCI format (or PDCCH) or a multicast DCI format (or PDCCH) (also, a PDSCH scheduled by UE specific DCI format (or PDCCH) of a PTP method) and a group common SPS PDSCH may be collectively referred to as an MBS PDSCH or a multicast PDSCH. In other words, unless otherwise described in the present disclosure, an MBS PDSCH or multicast PDSCH may include both a group common PDSCH according to a PTM method for an MBS and a UE specific PDSCH according to a PTP method for an MBS.

In addition, HARQ-ACK information associated with a multicast (or MBS) DCI format (or PDCCH) or multicast PDSCH may be referred to as MBS HARQ-ACK information or multicast HARQ-ACK information. Unless otherwise described in the present disclosure, such MBS HARQ-ACK information or multicast HARQ-ACK information may be transmitted through a UE specific PUCCH/PUSCH according to a PTP/PTM method or may be transmitted through a group common PUCCH/PUSCH according to a PTM method.

In addition, unless otherwise described in the present disclosure (e.g., distinction between a PDSCH by dynamic scheduling and a PDSCH by SPS), a PDSCH scheduled by a unicast DCI format (or PDCCH) and a UE-specific SPS PDSCH may be collectively referred to as a unicast/UE-specific PDSCH.

In addition, in the present disclosure, when a transport block (TB) for an MBS PDSCH or multicast PDSCH is successfully decoded, a UE may transmit an ACK as HARQ-ACK information. On the other hand, if a TB for an MBS PDSCH or multicast PDSCH is not successfully decoded, a UE may transmit a NACK as HARQ-ACK information. This HARQ-ACK transmission method is referred to as an ACK/NACK based HARQ-ACK method (mode).

On the other hand, if a TB for an MBS PDSCH or multicast PDSCH is successfully decoded, a UE may not transmit HARQ-ACK information (i.e., ACK) via a PUCCH (or PUSCH). On the other hand, if a TB for an MBS PDSCH or multicast PDSCH is not successfully decoded, a UE may transmit a NACK as HARQ-ACK information. This HARQ-ACK transmission method is referred to as a NACK-based HARQ-ACK method (mode). In other words, if a NACK only based HARQ-ACK method (mode) is configured, a UE may not perform PUCCH (or PUSCH) transmission in the case of an ACK, and may perform PUCCH (or PUSCH) transmission only in the case of a NACK.

For application of MBS, group common SPS transmission may be supported. Accordingly, the terminal may receive group common SPS transmission (i.e., static scheduling transmission) and group common dynamic scheduling transmission (dynamically scheduled transmission). In addition, the terminal may receive a group common SPS transmission and a static/dynamic scheduling transmission dedicated to the terminal. In this case, the UE may transmit the HARQ-ACK for the transmissions in the same slot or sub-slot.

Here, when unicast HARQ-ACK (i.e., HARQ-ACK for unicast PDSCH) and multicast HARQ-ACK (i.e., HARQ-ACK for multicast PDSCH) are multiplexed and transmitted as a PUCCH resource for unicast, there may be a problem in that the multiplexed HARQ-ACK cannot be transmitted because it exceeds the maximum uplink control information (UCI) payload size configured for a PUCCH for unicast.

Therefore, in the present disclosure, when HARQ-ACK for unicast transmissions and HARQ-ACKs for multiple group common transmissions (e.g., multicast PDSCH transmissions) are multiplexed and transmitted in the same slot/sub-slot or when HARQ-ACKs for multiple group common transmissions (e.g., multicast PDSCH transmissions)/UE dedicated transmissions (i.e., unicast PDSCH transmissions) are multiplexed and transmitted in the same slot (or sub-slot), a method for multiplexing HARQ-ACKs for the case where the maximum UCI payload size is exceeded is proposed.

For example, if a PUCCH resource for HARQ-ACKs for one or more MBS-use SPS PDSCHs (i.e., group common SPS PDSCHs) and a PUCCH resource for HARQ-ACKs for one or more unicast-use SPS PDSCHs are allocated to the same slot, a UE multiplexes these HARQ-ACKs and transmits them on a specific PUCCH resource. Here, the specific PUCCH resource is selected as a PUCCH resource for a unicast-use SPS PDSCH.

Alternatively, if a PUCCH resource for HARQ-ACKs for one or more MBS PDSCHs and a PUCCH resource for HARQ-ACKs for one or more unicast SPS PDSCHs are allocated to the same slot, a UE multiplexes these HARQ-ACKs and transmits them on a specific PUCCH resource. Here, the specific PUCCH resource is selected as a PUCCH resource for a unicast SPS PDSCH.

In the case where HARQ-ACK for multicast is multiplexed in a PUCCH resource for an SPS PDSCH for unicast in this way, there may be a case where the maximum UCI payload size configured based on unicast is exceeded.

In relation to the methods described in the present disclosure below, an example of a PUCCH resource selection method for multiplexing HARQ-ACKs for (general) multiple SPS PDSCHs may be as shown in Table 6 below (e.g., see 3GPP TS 38.213 clause 9.2.1).

[Table 1]

3GPP TS 38.213 clause 9.2.1

If the UE is provided SPS-PUCCH-AN-List and transmits $O_{UCI}$ UCI information bits that include only HARQ-ACK information bits in response to one or more SPS PDSCH receptions and SR, if any, the UE determines a PUCCH resource as below.

- A PUCCH resource is provided by sps-PUCCH-AN-ResourceID obtained from the first entry in sps-PUCCH-AN-List if $O_{UCI} \leq 2$ including 1 or 2 HARQ-ACK information bits and a positive or negative SR on one SR transmission occasion if transmission of HARQ-ACK information and SR occurs simultaneously.

- A PUCCH resource is provided by sps-PUCCH-AN-ResourceID obtained from the second entry in sps-PUCCH-AN-List, if provided, if $2 < O_{UCI} \leq N_{1,SPS}$ where $N_{1,SPS}$ is either provided by maxPayloadSize obtained from the second entry in sps-PUCCH-AN-List or is otherwise equal to 1706.

(continued)

| - A PUCCH resource is provided by sps-PUCCH-AN-ResourceID obtained from the third entry in sps-PUCCH-AN-List, if provided, if $N_{1,SPS} < O_{UCI} \leq N_{2,SPS}$ where $N_{2,SPS}$ is either provided by maxPayloadSize obtained from the third entry in sps-PUCCH-AN-List or is otherwise equal to 1706. |
| --- |
| - A PUCCH resource is provided by sps-PUCCH-AN-ResourceID obtained from the fourth entry in sps-PUCCH-AN-List, if provided, if $N_{2,SPS} < O_{UCI} \leq N_{3,SPS}$ where $N_{3,SPS}$ is equal to 1706. |

With respect to Table 6, SPS-PUCCH-AN-List may be included and configured in a PUCCH configuration (e.g., PUCCH-config). Here, a PUCCH configuration may be a PUCCH configuration for HARQ-ACK transmission for SPS purposes.

Table 7 illustrates an example of the SPS-PUCCH-AN-List IE (information element). The SPS-PUCCH-AN-List IE can be used to configure a list of PUCCH resources per HARQ-ACK codebook.

[Table 7]

```
SPS-PUCCH-AN-List-r16 ::= SEQUENCE (SIZE(1..4)) OF SPS-PUCCH-AN-r16
```

Referring to Table 7, the SPS-PUCCH-AN-List IE indicates a list of PUCCH resources for DL SPS HARQ-ACK. The SPS-PUCCH-AN-List IE may include 1 to 4 SPS-PUCCH-ANs.

Table 8 illustrates an example of the SPS-PUCCH-AN IE. The SPS-PUCCH-AN IE indicates a PUCCH resource for HARQ-ACK and may also be used to configure a maximum payload size for the PUCCH resource.

[Table 8]

```
SPS-PUCCH-AN-r16 ::= SEQUENCE {
sps-PUCCH-AN-ResourceID-r16 PUCCH-ResourceId,
maxPayloadSize-r16 INTEGER (4..256) OPTIONAL -- Need R
}
```

Referring to Table 8, the sps-PUCCH-AN-ResourceID indicates a PUCCH resource ID (identifier). The max-PayloadSize indicates the maximum payload size for the corresponding PUCCH resource ID.

In other words, configuration information related to a PUCCH may include a list of PUCCH resource(s) (e.g., 1 to 4) for receiving a unicast SPS PDSCH, and the maximum payload size may be defined/set for each PUCCH resource(s) included in the list of corresponding PUCCH resource(s). In addition, based on a size (number) of information bits of UCI including HARQ-ACK information and/or the maximum payload size for each PUCCH resource in a list of PUCCH resource(s), a PUCCH resource on which the corresponding UCI is to be transmitted in the list of corresponding PUCCH resource(s) may be determined.

Embodiment 1: A method for multiplexing HARQ-ACKs for unicast SPS PDSCH(s) and multicast SPS PDSCH(s) (with ACK/NACK-based feedback set) on the same PUCCH (i.e., PUCCH resource)

When HARQ-ACKs for unicast SPS PDSCH(s) and multicast SPS PDSCH(s) (configured with ACK/NACK-based feedback) are multiplexed on the same PUCCH (i.e., PUCCH resource) for the same priority case, a PUCCH carrying the multiplexed HARQ-ACK can be determined from a list of SPS PUCCH resources for unicast (e.g., SPS-PUCCH-AN-List).

In addition, when HARQ-ACKs for unicast SPS PDSCH(s) and multicast dynamic grant PDSCH(s) (configured with ACK/NACK-based feedback) are multiplexed on the same PUCCH (i.e., PUCCH resource) for the same priority case, a PUCCH carrying the multiplexed HARQ-ACK can be determined from a list of SPS PUCCH resources for unicast (e.g., SPS-PUCCH-AN-List).

In addition, when HARQ-ACKs for unicast SPS PDSCH(s) and multicast SPS PDSCH(s) (configured with ACK/NACK-based feedback) are multiplexed on the same PUCCH (i.e., PUCCH resource) for the same priority case, or when HARQ-ACKs for unicast SPS PDSCH(s) and multicast dynamic grant PDSCH(s) (configured with ACK/NACK-based feedback) are multiplexed on the same PUCCH (i.e., PUCCH resource) for the same priority case, if a total size of a UCI payload for the multiplexing (a total number of UCI information bits) is larger than the maximum payload size configured in a list of SPS PUCCH resources for unicast (e.g., SPS-PUCCH-AN-List), a UE may perform one of the following to multiplex HARQ-ACKs on a corresponding PUCCH up to the maximum payload size for a corresponding PUCCH resource.

As described above, one or more PUCCH resources in a list of SPS PUCCH resources for unicast (e.g., SPS-PUCCH-AN-List) can be configured, and the maximum payload size for each PUCCH resource can be configured by a base station or defined in the standard (e.g., the maximum payload size for a PUCCH resource corresponding to the 4-th entry in s list is fixed to 1706). Here, the maximum payload size configured in a list of SPS PUCCH resources for unicast (e.g., SPS-PUCCH-AN-List) can be used to collectively mean the maximum payload size for each of one or more PUCCH resources configured in the list of the SPS PUCCH resources, and can also mean the maximum payload size for a specific PUCCH resource determined from the list of the SPS PUCCH resources.

- Alternative 1: A UE may drop HARQ-ACK(s) of a multicast PDSCH (or HARQ-ACK(s) of unicast SPS PDSCH).

A UE may include HARQ-ACK(s) for a unicast SPS PDSCH in a PUCCH resource determined from a list of PUCCH resources (e.g., SPS-PUCCH-AN-List) with priority over HARQ-ACK(s) for multicast (SPS or dynamic grant) PDSCH(s). That is, a UE may transmit a PUCCH by configuring a payload with only HARQ-ACK(s) of a unicast SPS PDSCH, and may drop all HARQ-ACK(s) of a multicast PDSCH or a multicast SPS PDSCH.

Alternatively, conversely, a UE may include HARQ-ACK(s) for multicast (SPS or dynamic grant) PDSCH(s) in a PUCCH resource determined from a list of PUCCH resources (e.g., SPS-PUCCH-AN-List) with priority over HARQ-ACK(s) for a unicast SPS PDSCH. That is, a UE may transmit a PUCCH by configuring a payload with only HARQ-ACK(s) of a multicast PDSCH or a multicast SPS PDSCH, and drop all HARQ-ACK(s) of a unicast SPS PDSCH.

That is, a UE can drop HARQ-ACK(s) of a multicast PDSCH or HARQ-ACK(s) of a unicast SPS PDSCH. Here, even if a UCI payload size including only HARQ-ACK(s) of a multicast PDSCH or HARQ-ACK(s) of a unicast SPS PDSCH that are not dropped (i.e., transmitted on PUCCH) is smaller than the maximum payload size for a PUCCH resource determined from a list of SPS PUCCH resources (e.g., SPS-PUCCH-AN-List) for unicast, the dropping operation can be performed on all HARQ-ACK(s) of a multicast PDSCH or HARQ-ACK(s) of a unicast SPS PDSCH.

**[0131]** - Alternative 2: A UE may fill (include) HARQ-ACK(s) of a multicast PDSCH only up to the maximum payload size, and drop HARQ-ACK(s) of the remaining multicast PDSCH. That is, a UE may multiplex and transmit HARQ-ACK(s) of a multicast PDSCH up to the maximum possible payload size.

In other words, a UE can perform the PUCCH transmission by first including HARQ-ACK(s) for a unicast SPS PDSCH in a PUCCH, and then including HARQ-ACK(s) of a multicast PDSCH only up to the maximum payload size for the corresponding PUCCH resource in the PUCCH.

Here, the UE can preferentially fill (include) the most significant bit (MSB) HARQ-ACK bit for a multicast PDSCH or a multicast SPS PDSCH, and drop the rest. That is, the least significant bit (LSB) HARQ-ACK bit can be preferentially dropped. In other words, a UE can sequentially include the leftmost bit in a HARQ-ACK information bit string for a multicast PDSCH or a multicast SPS PDSCH in a PUCCH.

Alternatively, a UE can preferentially fill (include) HARQ-ACK bits for the lowest G-RNTI value (or lowest G-CS-RNTI value) for a multicast PDSCH or a multicast SPS PDSCH, in ascending order of G-RNTI values (or G-CS-RNTI values), and drop the rest. That is, the HARQ-ACK bit for the highest G-RNTI value (or G-CS-RNTI value) can be preferentially dropped in descending order of G-RNTI values. In other words, a UE can sequentially include HARQ-ACK information bit(s) in a PUCCH in ascending order of G-RNTI values (or G-CS-RNTI values) for a multicast PDSCH or a multicast SPS PDSCH.

Alternatively, a UE may preferentially fill (include) the HARQ-ACK bit for the highest G-RNTI value (or highest G-CS-RNTI value) for a multicast PDSCH or a multicast SPS PDSCH in descending order of G-RNTI values (or the G-CS-RNTI values), and drop the rest. That is, a UE may preferentially drop the HARQ-ACK bit for the lowest G-RNTI value (or G-CS-RNTI value) in ascending order of G-RNTI values (or the G-CS-RNTI values). In other words, a UE may sequentially include HARQ-ACK information bit(s) in a PUCCH in descending order of G-RNTI values (or G-CS-RNTI values) for a multicast PDSCH or a multicast SPS PDSCH.

Alternatively, a UE may preferentially fill in the most recent HARQ-ACK bit(s) and drop the rest. That is, the oldest HARQ-ACK bit(s) may be preferentially dropped. In other words, a UE may sequentially include HARQ-ACK information bit(s) in a PUCCH in reverse chronological order, starting from a HARQ-ACK bit for the most recently received a multicast PDSCH or a multicast SPS PDSCH.

Alternatively, a UE may preferentially fill in the oldest HARQ-ACK bit(s) and drop the rest. That is, the most recent HARQ-ACK bit(s) may be preferentially dropped. In other words, a UE may sequentially include HARQ-ACK information bit(s) in a PUCCH in chronological order, starting from a HARQ-ACK bit for the most recently received a multicast PDSCH or a multicast SPS PDSCH.

- Alternative 3: A PUCCH resource configured with the maximum payload size in SPS-PUCCH-AN-List may be selected, and all HARQ-ACK bits are included in the selected PUCCH and transmitted by multiplexing them. Here, depending on configuration of a base station, a UE can increase PUCCH transmission power for the corresponding PUCCH transmission to a certain level or more. That is, a UE can increase PUCCH transmission power to a certain level or more than when transmitting only unicast HARQ-ACK(s) in a corresponding PUCCH resource.

In other words, a UE can determine a PUCCH resource that supports the largest payload size within a list of SPS PUCCH resources (e.g., SPS-PUCCH-AN-List). Then, a UE can perform PUCCH transmission by increasing PUCCH transmission power to a certain level or higher on the determined PUCCH resource.

Here, the certain level may be defined in the standard or may be configured by s base station. In addition, a size of the certain level may be determined based on the number of bits of unicast HARQ-ACK(s) and HARQ-ACK(s) for a multicast PDSCH or a multicast SPS PDSCH to be multiplexed.

Meanwhile, if a NACK only based HARQ-ACK is supported in the present disclosure, the following methods can be supported. When multiplexed with a unicast HARQ-ACK in the following manner, if the maximum UCI payload size set for a PUCCH resource is exceeded, a UE can transmit the multiplexed HARQ-ACK by applying one of the above alternatives.

- Option 1: a PUCCH resource determination in case of multiplexing NACK only based HARQ-ACK for multicast PDSCH(s) and unicast HARQ-ACK for a unicast PDSCH

For example, when a PUCCH resource carrying the NACK only-based HARQ-ACK feedback for multicast and a PUCCH resource carrying ACK/NACK-based HARQ-ACK feedback for unicast are allocated in a same UL slot, the UE may multiplex the NACK only-based HARQ-ACK feedback for multicast and ACK/NACK-based HARQ-ACK feedback for unicast in one PUCCH resource.

For multiplexing the NACK only-based HARQ-ACK feedback for multicast and ACK/NACK-based HARQ-ACK feedback for unicast, the UE may determine the PUCCH resources for transmission based on the PUCCH Resource Indicator (PRI) indicated in the last DCI. Herein, the last DCI may refer to the last received DCI (i.e., the most recently received DCI) for unicast.

In multiplexing as described above, NACK only-based HARQ-ACK feedback may be transformed to ACK/NACK-based HARQ-ACK feedback.

- Option 2: a PUCCH resource determination method in the case of multiplexing NACK only-based HARQ-ACK and multicast ACK/NACK-based HARQ-ACK for multicast PDSCH(s)

Here, multicast ACK/NACK-based HARQ-ACK may correspond to ACK/NACK-based HARQ-ACK for multicast PDSCH.

For example, when a PUCCH resource carrying the NACK only-based HARQ-ACK feedback for multicast and a PUCCH resource carrying ACK/NACK-based HARQ-ACK feedback for multicast are allocated in a same UL slot, the UE may multiplex the NACK only-based HARQ-ACK feedback for multicast and ACK/NACK-based HARQ-ACK feedback for multicast in one PUCCH resource.

For multiplexing the NACK only-based HARQ-ACK feedback for multicast and ACK/NACK-based HARQ-ACK feedback for multicast, the UE may determine the PUCCH resources for transmission based on the PRI indicated in the last DCI. Herein, the last DCI may refer to the last received DCI indicating PRI for ACK/NACK-based HARQ-ACK feedback for multicast.

In multiplexing as described above, NACK only-based HARQ-ACK feedback may be transformed to ACK/NACK-based HARQ-ACK feedback.

- Option 3: a PUCCH resource determination method in the case of multiplexing HARQ-ACKs for dynamically scheduled multicast PDSCH and unicast SPS PDSCH

Here, the dynamically scheduled multicast PDSCH may mean a PDSCH scheduled based on the DCI format for multicast purposes.

For example, when a PUCCH resource carrying HARQ-ACK feedback for multicast and a PUCCH resource carrying HARQ-ACK feedback for unicast Semi-Persistent Scheduling (SPS) are allocated in a same UL slot, the UE may multiplex HARQ-ACK feedback for multicast and HARQ-ACK feedback for unicast SPS PDSCH in one PUCCH resource.

For multiplexing HARQ-ACKs for dynamically scheduled multicast PDSCH and unicast SPS PDSCH, the UE may determine a PUCCH resource based on one of the following options.

Option 3A: A PUCCH resource can be determined based on a PRI indicated by the last received DCI that dynamically schedules a multicast PDSCH.

Option 3B: A PUCCH resource can be determined based on a PUCCH resource for HARQ-ACK for a unicast SPS PDSCH.

Alternatively, if a PUCCH resource carrying HARQ-ACK feedback for multicast and a PUCCH resource carrying HARQ-ACK feedback for unicast SPS are allocated in the same UL slot,

Option 3-1: a UE may drop HARQ-ACK for multicast while transmitting HARQ-ACK to a unicast SPS PDSCH.

Option 3-2: if HARQ-ACK for the multicast is based on NACK only-based HARQ-ACK, a UE may drop the HARQ-ACK for multicast.

Here, if the HARQ-ACK for multicast is based on ACK/NACK-based HARQ-ACK, the UE may multiplex the HARQ-ACK feedback for multicast and the HARQ-ACK feedback for unicast SPS PDSCH in one PUCCH resource. Alternatively, if the HARQ-ACK for multicast is based on ACK/NACK-based HARQ-ACK, the UE may drop HARQ-ACK for unicast.

The UE may perform an operation of the corresponding example regardless of whether HARQ-ACK for multicast and HARQ-ACK to unicast SPS PDSCH have a same priority or different priorities. Alternatively, the UE may perform an operation of the corresponding example when HARQ-ACK for multicast and HARQ-ACK to unicast SPS PDSCH have a same priority while performing an operation in the example described later when they have different priorities.

Option 3-3: a UE may transmit HARQ-ACK with high priority, while dropping HARQ-ACK with low priority.

HARQ-ACK with low priority may be configured to low priority by an RRC message, or may be either HARQ-ACK for multicast or HARQ-ACK for a unicast SPS PDSCH, which is configured to low priority by DCI.

Option 3-4: a UE may drop the HARQ-ACK for the unicast SPS PDSCH, while transmitting HARQ-ACK for multicast based on a PRI indicated by the last received DCI for multicast.

- Option 4: a PUCCH resource determination method in the case of multiplexing HARQ-ACKs for multicast SPS PDSCH and dynamically scheduled multicast PDSCH

Here, the dynamically scheduled multicast PDSCH may mean a PDSCH scheduled based on the DCI format for multicast purposes.

For example, if a PUCCH resource carrying HARQ-ACK feedback for the multicast PDSCH scheduled by the multicast DCI and a PUCCH resource carrying HARQ-ACK feedback for the group common SPS PDSCH are allocated in the same UL slot, the UE may multiplex HARQ-ACK feedback for the multicast PDSCH and HARQ-ACK feedback for the group common SPS PDSCH in one PUCCH resource.

In multiplexing HARQ-ACKs for the dynamically scheduled multicast PDSCH and multicast SPS PDSCH, the UE may determine the PUCCH resource based on the last received DCI for dynamically scheduling the multicast PDSCH.

- Option 5: a PUCCH resource determination method in the case of multiplexing HARQ-ACKs for multicast SPS PDSCHs

For example, when PUCCH resources carrying HARQ-ACK feedbacks for group common SPS (e.g., multicast SPS) PDSCHs are allocated in a same UL slot, the UE may multiplex HARQ-ACK feedbacks for group common SPS PDSCHs in one PUCCH resource.

In multiplexing HARQ-ACK feedbacks for group common SPS PDSCHs, (referring to the method in Table 6 above), the UE may determine the PUCCH resource based on SPS PUCCH ACK/NACK related list information (e.g., sps-PUCCH-AN-List) in the PUCCH configuration (e.g., PUCCH-config) for multicast.

In this regard, when PUCCH configuration for multicast is not configured/provided, PUCCH configuration for unicast may be used. As a detailed example, if the SPS PUCCH ACK/NACK related list information (e.g., sps-PUCCH-AN-ListMulticast) in the PUCCH configuation for multicast is not configured, SPS PUCCH ACK/NACK-related list information (e.g., sps-PUCCH-AN-List) in PUCCH configuration for unicast may be used to determine PUCCH resources.

Additionally/alternatively, when a scheduling request (SR) is multiplexed with HARQ-ACK feedbacks for group common SPS PDSCHs,

Option 5A: (referring to the method in Table 6 above), the UE may determine the PUCCH resource based on the SPS PUCCH ACK/NACK related list information (e.g., sps-PUCCH-AN-List) in the PUCCH configuration for unicast. It may be assumed that the PUCCH configuration for unicast may accommodate the group common SPS PDSCH.

Option 5B: if SR is multiplexed with HARQ-ACK feedbacks for group common SPS PDSCHs, (if PUCCH configuration for unicast is used) ACK/NACK-based HARQ-ACKs for group common SPS PDSCHs are dropped, while SR may be transmitted.

Option 5C: if SR is multiplexed with HARQ-ACK feedbacks for group common SPS PDSCHs, (if PUCCH configuration for unicast is used) ACK/NACK-based HARQ-ACKs for group common SPS PDSCHs are transmitted, while SR may be dropped.

Additionally/alternatively, when NACK only-based HARQ-ACK(s) is configured for some/all of HARQ-ACK(s) for group common SPS PDSCHs, NACK only-based HARQ-ACK(s) may be transformed to ACK/NACK-based HARQ-ACK(s) for multiplexing HARQ-ACKs for group common SPS PDSCHs in one PUCCH resource.

Alternatively, for multiplexing N NACK only-based HARQ-ACK(s) for N group common SPS PDSCH, if the PUCCH configuration includes SPS-specific PUCCH resources for NACK only-based HARQ-ACK and NACK only-based HARQ-ACK is configured for N group common SPS PDSCH, the UE may operate according to at least one of the following examples.

As an example, if the threshold is less than or equal to N, NACK only-based HARQ-ACK(s) can be transformed to ACK/NACK-based HARQ-ACK(s) for multiplexing HARQ-ACKs for group common SPS PDSCHs in one PUCCH resource.

As another example, if the threshold is greater than N, the UE may select a PUCCH resource corresponding to a combination of NACK only-based HARQ-ACK values for N SPS PDSCHs among multiple PUCCH resources. Alternatively, if the threshold is greater than N, the UE may select a PUCCH sequence corresponding to a combination of NACK only-based HARQ-ACK values for N SPS PDSCHs. The UE may select a PUCCH resource for the SPS PDSCH with the lowest SPS configuration index among the N group common SPS PDSCHs.

- Option 6: a PUCCH resource determination method in the case of multiplexing HARQ-ACK for multicast SPS PDSCHs and HARQ-ACK for unicast SPS PDSCHs

For example, when a PUCCH resource carrying HARQ-ACK feedback for a unicast SPS PDSCH and a PUCCH resource carrying HARQ-ACK feedback for a group common SPS (e.g., multicast SPS) PDSCH are allocated to the same UL slot, the UE may multiplex HARQ-ACK feedback for the unicast SPS PDSCH and HARQ-ACK feedback for the group common SPS PDSCH in one PUCCH resource.

For multiplexing HARQ-ACK for group common SPS PDSCH(s) and HARQ-ACK for unicast SPS PDSCH(s) (if present, and SR), (referring to the method in Table 6 above), the UE may determine the PUCCH resource based on SPS PUCCH ACK/NACK related list information (e.g., sps-PUCCH-AN-List) in the PUCCH configuration (e.g., PUCCH-config) for unicast.

In this regard, when NACK only-based HARQ-ACK is configured for group common SPS, NACK only-based HARQ-ACK may be transformed to ACK/NACK-based HARQ-ACK. Alternatively, when NACK only-based HARQ-ACK is configured for group common SPS, NACK only based HARQ-ACK may be dropped.

When HARQ-ACKs for multicast SPS and unicast SPS are multiplexed in the determined PUCCH resource, the UE may determine/construct/generate HARQ-ACK information bits according to at least one of the following examples.

Option 6-1: HARQ-ACK information bits may be ordered based on ascending order of SPS configuration index from the lowest SPS configuration index for both group common SPS PDSCH(s) and unicast SPS PDSCH(s). A base station (e.g., gNB) may configure different SPS configuration indexes for group common SPS PDSCH(s) and (HARQ-ACK) unicast SPS PDSCH(s).

Option 6-2: HARQ-ACK information bits for all unicast SPS PDSCH(s) may be ordered before HARQ-ACK information bits for all multicast SPS PDSCH(s). For HARQ-ACK information bits for all unicast SPS PDSCH(s), HARQ-ACK information bits may be ordered based on the ascending order of SPS configuration index from the lowest SPS configuration index for unicast SPS PDSCH(s). For HARQ-ACK information bits for all multicast SPS PDSCH(s), HARQ-ACK information bits may be ordered based on the ascending order of SPS configuration index from the lowest SPS configuration index for multicast SPS PDSCH(s).

As another example, a UE may determine/configure/generate HARQ-ACK information bits according to at least one of the following examples:

Alt 6A: when a PUCCH resource carrying HARQ-ACK feedback for a unicast SPS PDSCH and a PUCCH resource carrying HARQ-ACK feedback for a group common SPS (e.g., multicast SPS) PDSCH are allocated to the same UL slot, the UE may drop HARQ-ACK for group common SPS PDSCH(s) and transmit HARQ-ACK for unicast SPS PDSCH(s) based on PUCCH configuration for unicast.

Alt 6B: when a PUCCH resource carrying HARQ-ACK feedback for a unicast SPS PDSCH and a PUCCH resource carrying HARQ-ACK feedback for a group common SPS (e.g., multicast SPS) PDSCH are allocated to the same UL slot, the UE may transmit another SPS PDSCH with the same cast type as the SPS PDSCH with the lowest SPS configuration index while dropping another SPS PDSCH. If the UE transmits HARQ-ACK for group common SPS PDSCH(s), the UE may transmit HARQ-ACK for group common SPS PDSCH(s) based on PUCCH configuration for multicast.

Alt 6C: when a PUCCH resource carrying HARQ-ACK feedback for a unicast SPS PDSCH and a PUCCH resource carrying HARQ-ACK feedback for a group common SPS (e.g., multicast SPS) PDSCH are allocated to the same UL slot, if SR is multiplexed together, the UE may drop HARQ-ACK for group common SPS PDSCH(s) and transmit HARQ-ACK for SR and unicast SPS PDSCH(s) based on PUCCH configuration for unicast. If SR is not multiplexed together, the UE may operate as in Alt 6-1 and Alt 6-2 described above.

- Option 7: a PUCCH resource determination method in the case of multiplexing NACK only-based HARQ-ACK for multicast SPS PDSCH and ACK/NACK-based HARQ-ACK for multicast SPS PDSCH

For example, for multiplexing NACK only-based HARQ-ACK and ACK/NACK-based HARQ-ACK for multicast SPS PDSCHs, (referring to the method in Table 6 above), the UE may determine the PUCCH resource based on the SPS PUCCH ACK/NACK related list information (e.g., sps-PUCCH-AN-List) in the PUCCH configuration for multicast for ACK/NACK-based HARQ-ACK.

In this regard, when PUCCH configuration for multicast is not configured/provided, PUCCH configuration for unicast may be used. As a detailed example, if the SPS PUCCH ACK/NACK related list information (e.g., sps-PUCCH-AN-ListMulticast) in the PUCCH configuration for multicast is not configured, SPS PUCCH ACK/NACK-related list information (e.g., sps-PUCCH-AN-List) in PUCCH configuration for unicast may be used to determine a PUCCH resource.

Additionally/alternatively, when scheduling request (SR) is multiplexed together, (referring to the method in Table 6 above), the UE may determine the PUCCH resource based on the SPS PUCCH ACK/NACK related list information (e.g., sps-PUCCH-AN-List) in the PUCCH configuration for unicast.

Alternatively, when SR is multiplexed together,

Alt 7A: the UE may drop HARQ-ACK for group common SPS PDSCH(s) and transmit SR based on PUCCH configuration for unicast.

Alt 7B: if SR is multiplexed together, the UE may transmit HARQ-ACK(s) for group common SPS PDSCH(s) and drop the SR.

Embodiment 2: A Method for transmitting HARQ-ACK based on NACK only above threshold

In the present disclosure, a UE can configure and transmit a PUCCH resource for NACK only based HARQ-ACK using the following methods.

If PUCCH transmission of NACK only based HARQ-ACK collides with PUCCH transmission of another NACK only based HARQ-ACK or must be transmitted in the same slot, a UE capable of transmitting two PUCCHs simultaneously may transmit at least two NACK only based HARQ-ACKs simultaneously on different PUCCHs. However, if a UE does not have a capability of transmitting two PUCCHs simultaneously or more NACK only based HARQ-ACKs collide than a UE's support capability, the UE may multiplex and transmit NACK only based HARQ-ACKs in the following manner.

For example, if N HARQ-ACK transmissions for N group common PDSCH transmissions are multiplexed and transmitted in the same UL slot, a base station can configure 2N - 1 NACK only PUCCH resources. Here, the group common PDSCHs can be group common SPS PDSCHs or group common SPS PDSCHs scheduled by DCI. Here, at least one PDSCH among N can be scheduled by DCI.

In addition, for N NACK only based HARQ-ACKs transmitted in the same UL slot, if N < threshold or N = threshold, a UE can transmit a PUCCH by multiplexing N HARQ-ACKs in one of the above methods. If for N NACK only based HARQ-ACKs transmitted in the same UL slot, if N > threshold, a UE can transmit a PUCCH in one of the following methods. Here, a threshold can be configured by a base station or defined in the standard. If configured by a base station, the base station can configure a threshold per G-RNTI, per PUCCH configuration (e.g., PUCCH-config), per CFR, per UL BWP, or per service cell.

Embodiment 2-1: A UE can drop NACK only based HARQ-ACKs above threshold.

For example, a HARQ-ACK with a lower priority may be dropped with priority over a HARQ-ACK with a higher priority. That is, only HARQ-ACKs with a threshold number of high priorities may be multiplexed.

Alternatively, a HARQ-ACK for a recently received PDSCH may be dropped with priority over a HARQ-ACK for a previously received PDSCH. That is, only HARQ-ACKs for group common PDSCHs with a threshold number of past receptions may be multiplexed.

Alternatively, HARQ-ACKs for previously received PDSCHs may be dropped with priority over HARQ-ACKs for recently received PDSCHs. That is, only HARQ-ACKs for the most recently received group common PDSCHs as many as a threshold number may be multiplexed.

Alternatively, HARQ-ACKs for large remaining PDBs (Packet Data Budgets) may be dropped with priority over HARQ-ACKs for small remaining PDBs. That is, only HARQ-ACKs for transport blocks as many as a threshold number of small remaining PDBs may be multiplexed.

Alternatively, HARQ-ACKs for SPS PDSCHs that are not scheduled by DCI may be preferentially dropped. Here, among the SPS PDSCHs, HARQ-ACKs for SPS PDSCHs for a higher SPS config index may be preferentially dropped. Accordingly, HARQ-ACKs for SPS PDSCHs for a threshold number of lower SPS config indexes may be preferentially multiplexed.

Alternatively, HARQ-ACK for a group common PDSCH scheduled with DCI may be dropped preferentially.

Afterwards, among SPS PDSCHs, HARQ-ACK for an SPS PDSCH for a higher SPS config index may be dropped preferentially. Therefore, an SPS PDSCH for a lower SPS config index may be multiplexed preferentially.

Alternatively, when multiple NACK only based HARQ-ACKs for different G-RNTIs are multiplexed, HARQ-ACK with a lower G-RNTI value may be dropped preferentially than HARQ-ACK with a higher G-RNTI value. Alternatively, conversely, HARQ-ACK with a higher G-RNTI value may be dropped preferentially than HARQ-ACK with a lower G-RNTI value.

Embodiment 2-2: A UE can bundle NACK only-based HARQ-ACK(s) greater than or equal to a threshold.

For example, in all other cases except when all NACK only-based HARQ-ACK(s) greater than or equal to a threshold are ACKs (i.e., when at least one NACK occurs for NACK only-based HARQ-ACKs greater than or equal to a threshold), a UE can decide to use 1-bit NACK (i.e., bundling). Then, a UE can transmit it by multiplexing it with NACK only-based HARQ-ACK(s) less than or equal to a threshold.

Here, HARQ-ACK with a lower priority can be bundled with priority over HARQ-ACKs with a higher priority. That is, only HARQ-ACKs with a threshold number of high priorities can be multiplexed.

Alternatively, HARQ-ACK for a recently received PDSCH can be bundled with priority over HARQ-ACK for a previously received PDSCH. That is, only HARQ-ACKs for previously received group common PDSCHs with a threshold number of thresholds can be multiplexed.

Alternatively, HARQ-ACK for a previously received PDSCH can be bundled with priority over HARQ-ACK for a recently received PDSCH. That is, only HARQ-ACKs for most recently received group common PDSCHs with a threshold number of thresholds can be multiplexed.

Alternatively, HARQ-ACK with a large remaining PDB (Packet Data Budget) may be preferentially bundled over HARQ-ACK with a small remaining PDB. That is, only HARQ-ACKs for transport blocks with a small threshold number of remaining PDBs may be multiplexed.

Alternatively, HARQ-ACK for an SPS PDSCH that is not scheduled by DCI may be preferentially bundled. Here, among SPS PDSCHs, HARQ-ACK for an SPS PDSCH with a higher SPS config index may be preferentially bundled. Accordingly, HARQ-ACKs for SPS PDSCHs with a lower SPS config index may be preferentially multiplexed.

Alternatively, HARQ-ACK for a group common PDSCH scheduled with DCI may be preferentially bundled. Afterwards, among SPS PDSCHs, HARQ-ACK for an SPS PDSCH for a higher SPS config index may be preferentially bundled. Accordingly, HARQ-ACKs for SPS PDSCHs for a lower SPS config index may be preferentially multiplexed.

When multiple NACK only based HARQ-ACKs for different G-RNTIs are multiplexed, HARQ-ACK with a lower G-RNTI value may be preferentially bundled over HARQ-ACK with a higher G-RNTI value. Alternatively, conversely, HARQ-ACK with a higher G-RNTI value may be preferentially bundled over HARQ-ACK with a lower G-RNTI value.

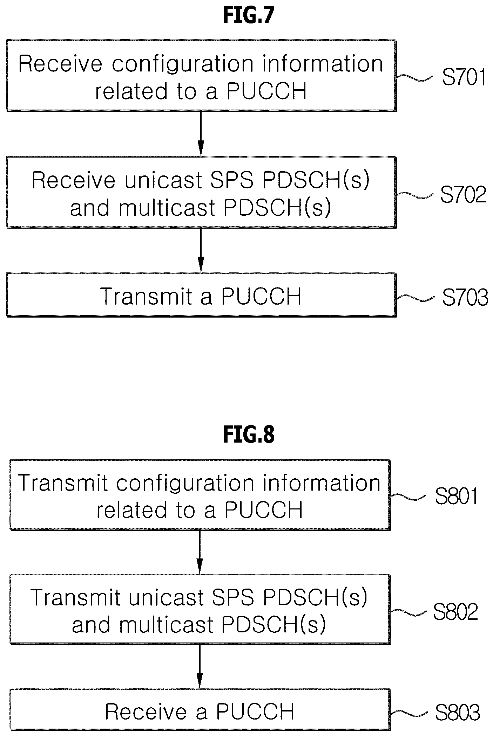

FIG. 7 is a diagram illustrating an operation of a UE for a HARQ-ACK transmission and reception method according to an embodiment of the present disclosure.

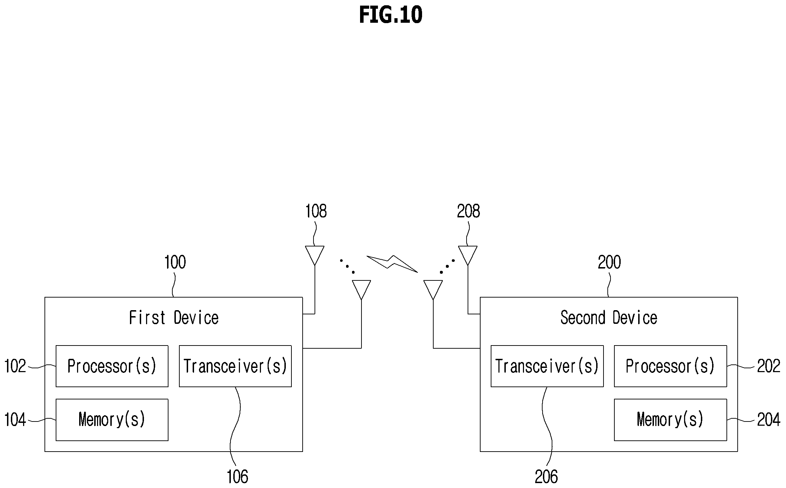

FIG. 7 illustrates an operation of a UE based on the previously proposed method (e.g., any one or a combination of Embodiments 1, 2 and detailed embodiments thereof). An example of FIG. 7 is for convenience of description and does not limit the scope of the present disclosure. Some step(s) illustrated in FIG. 7 may be omitted depending on circumstances and/or settings. In addition, a UE in FIG. 7 is just one example, and may be implemented as the device illustrated in FIG. 10 below. For example, the processor (102/202) of FIG. 10 can control to transmit and receive channels/signals/data/information, etc. using the transceiver (106/206) and can also control to store transmitted or received channels/signals/information/data/information, etc. in the memory (104/204).

A UE receives configuration information related to a PUCCH from a base station (S701).

Here, the configuration information may include information on a list of PUCCH resources for unicast SPS PDSCH reception(s) (see Table 6 above). As described above, the configuration information may include a list of PUCCH resource(s) (e.g., 1 to 4) for unicast SPS PDSCH reception(s) (see Table 7 and Table 8 above), and a maximum payload size may be defined/configured for each PUCCH resource(s) included in the list of the corresponding PUCCH resource(s). In addition, based on a size (number) of information bits of UCI including HARQ-ACK information and/or a maximum payload size for each PUCCH resource in the list of PUCCH resource(s), a PUCCH resource on which the corresponding UCI is to be transmitted in the list of the corresponding PUCCH resource(s) may be determined.

In addition, although not shown in FIG. 7, a UE can individually receive configuration information related to a HARQ-ACK for a unicast PDSCH and configuration information related to a HARQ-ACK for a multicast PDSCH from a base station.

Configuration information related to a HARQ-ACK for a PDSCH may include information on a type of a HARQ-ACK codebook (e.g., type 1 HARQ-ACK codebook, type 2 HARQ-ACK codebook, type 3 HARQ-ACK codebook, etc.) configured by multiplexing HARQ-ACK information for a PDSCH. For example, if the higher layer parameter pdsch-HARQ-ACK-Codebook is set to semi-static, it may indicate a type 2 HARQ-ACK codebook. In addition, if the higher layer parameter pdsch-HARQ-ACK-Codebook is set to dynamic, it may indicate a type 2 HARQ-ACK codebook. In addition, if the higher layer parameter pdsch-HARQ-ACK-OneShotFeedback is set, it may indicate a type 3 HARQ-ACK codebook.

In addition, although not shown in FIG. 7, a UE may receive SPS configuration information (e.g., SPS-Config) for unicast SPS PDSCH reception and/or multicast SPS/broadcast SPS PDSCH reception from a base station.

The SPS-Config IE is used to configure downlink semi-persistent transmission. For example, an SPS configuration for unicast SPS PDSCH reception can be configured in configuration information related to a downlink dedicated BWP (e.g., BWP-DownlinkDedicated) used to configure dedicated (UE specific) parameters of a downlink BWP. In addition, an SPS configuration for multicast SPS PDSCH reception can be configured in configuration information for a UE specific CFR for multicast (e.g., CFR-ConfigMulticast).

Here, multiple SPS configurations can be configured within one BWP of a serving cell, and the multiple SPS configurations can be identified by an SPS configuration index (e.g., sps-ConfigIndex). That is, an SPS configuration can be configured by all parameters within one SPS configuration information (e.g., SPS-Config) identified by an SPS configuration index (e.g., sps-ConfigIndex).

In addition, even if not shown in FIG. 7, a UE may receive configuration information from a base station according to the method proposed above (e.g., one or a combination of Embodiments 1, 2 and detailed embodiments thereof).

The above-described configuration information may be transmitted via a higher layer message (e.g., an RRC message), and the higher layer message may be a group common message or a UE-dedicated message.

A UE receives unicast SPS PDSCH(s) and multicast PDSCH(s) from a base station (S702).

Here, the multicast PDSCH(s) may be dynamic grant-based multicast PDSCH(s). That is, they may be scheduled by DCI, and in this case, although not shown in FIG. 7, a UE may receive DCI scheduling multicast PDSCH(s) from a base station.

In addition, the multicast PDSCH(s) may be multicast SPS PDSCH(s). In this case, multicast SPS PDSCH(s) may be configured by higher layer signaling (e.g., see Table 9) as described above, and the corresponding transmission may be activated/released by DCI. In this case, although not shown in FIG. 7, a UE may receive DCI activating multicast SPS PDSCH(s) from a base station.

A UE transmits a PUCCH to a base station (S703).

Here, the PUCCH may include (carry) HARQ-ACK information associated with the unicast SPS PDSCH(s) (hereinafter referred to as first HARQ-ACK information) and/or HARQ-ACK information associated with the multicast PDSCH(s) (hereinafter referred to as second HARQ-ACK information). In addition, when multiplexed with other uplink control information (e.g., scheduling request, channel state information, etc.), the PUCCH may include (carry) UCI including first HARQ-ACK information and/or second HARQ-ACK information.

In addition, when the first HARQ-ACK information and the second HARQ-ACK information are reported within one slot (i.e., scheduled by a base station to be reported within the same slot), the first HARQ-ACK information and the second HARQ-ACK information may be multiplexed within the PUCCH. In addition, when the first HARQ-ACK information and the second HARQ-ACK information are multiplexed within the PUCCH, a PUCCH resource for the PUCCH can be determined from a list of PUCCH resources for unicast PDSCH transmission(s). In other words, in order to multiplex the first HARQ-ACK information and the second HARQ-ACK information within the PUCCH, a PUCCH resource for the PUCCH can be determined from a list of PUCCH resources for unicast PDSCH transmission(s).

If a total payload size including the first HARQ-ACK information and the second HARQ-ACK information (i.e., a total payload size of UCI) exceeds the maximum payload size for the determined PUCCH resource, the first HARQ-ACK information in the PUCCH may be included with priority over the second HARQ-ACK information. That is, the first HARQ-ACK information may be transmitted on the PUCCH with priority over the second HARQ-ACK information.

For example, if a total payload size including the first HARQ-ACK information and the second HARQ-ACK information (i.e., a total payload size of UCI) exceeds the maximum payload size for the determined PUCCH resource, all of the second HARQ-ACK information may be dropped. That is, only the first HARQ-ACK information may be transmitted on the PUCCH.

For another example, if a total payload size including the first HARQ-ACK information and the second HARQ-ACK information (i.e., a total payload size of UCI) exceeds the maximum payload size for the determined PUCCH resource, the first HARQ-ACK information is all included in the PUCCH, and the second HARQ-ACK information is included in the PUCCH only up to the maximum payload size, and the rest can be dropped. That is, the first HARQ-ACK information is all transmitted on the PUCCH, and the second HARQ-ACK information can be transmitted on the PUCCH only as much as possible considering the maximum payload size supported by the determined PUCCH resource.

In this case, for example, the second HARQ-ACK information may be included in the PUCCH in descending order from the most significant bit (MSB). In other words, among second HARQ-ACK information bits, the leftmost HARQ-ACK information bit may be sequentially included in the PUCCH, and when the maximum payload size supported by the determined PUCCH resource is reached, the remaining second HARQ-ACK information bits may be dropped.

In addition, for example, the second HARQ-ACK information may be included in the PUCCH in ascending order of a G-RNTI value or G-CS-RNTI value starting from the HARQ-ACK information for a multicast PDSCH associated with the lowest G-RNTI or G-GS-RNTI value. In other words, among second HARQ-ACK information bits, HARQ-ACK information bits for a multicast PDSCH associated with the lowest G-RNTI or G-GS-RNTI value are sequentially included in the PUCCH in ascending order of a G-RNTI value or G-CS-RNTI value, and when the maximum payload size supported by the determined PUCCH resource is reached, the remaining second HARQ-ACK information bits may be dropped.

In addition, for example, the second HARQ-ACK information may be included in the PUCCH in descending order of a G-RNTI value or G-CS-RNTI value starting from HARQ-ACK information for a multicast PDSCH associated with the highest G-RNTI or G-GS-RNTI value. In other words, among second HARQ-ACK information bits, HARQ-ACK information bits for a multicast PDSCH associated with the highest G-RNTI or G-GS-RNTI value are sequentially included in the PUCCH in descending order of a G-RNTI value or G-CS-RNTI value, and when the maximum payload size supported by the determined PUCCH resource is reached, the remaining second HARQ-ACK information bits may be dropped.

In addition, for example, the second HARQ-ACK information may be included in the PUCCH in reverse chronological order starting from HARQ-ACK information for the most recent multicast PDSCH. In other words, among second HARQ-ACK information bits, the HARQ-ACK information bits for the most recent multicast PDSCH may be included in the PUCCH in reverse chronological order, and when the maximum payload size supported by the determined PUCCH resource is reached, the remaining second HARQ-ACK information bits may be dropped.

In addition, for example, the second HARQ-ACK information may be included in the PUCCH in reverse chronological order starting from HARQ-ACK information for the earliest multicast PDSCH. In other words, among second HARQ-ACK information bits, the HARQ-ACK information bits for the earliest multicast PDSCH may be included in the PUCCH in chronological order, and when the maximum payload size supported by the determined PUCCH resource is reached, the remaining second HARQ-ACK information bits may be dropped.

Meanwhile, in order to multiplex the first HARQ-ACK information and the second HARQ-ACK information within the PUCCH, the PUCCH resource may be determined as a PUCCH resource that supports the largest maximum payload size in a list of PUCCH resources for unicast PDSCH transmission(s). In this case, transmission power of the PUCCH may be determined to be greater than when only the first HARQ-ACK is transmitted on the PUCCH resource.

FIG. 8 is a diagram illustrating an operation of a base station for a HARQ-ACK transmission and reception method according to an embodiment of the present disclosure.

FIG. 8 illustrates an operation of a base station based on the previously proposed method (e.g., any one or a combination of Embodiments 1, 2 and detailed embodiments thereof). An example of FIG. 8 is for convenience of description and does not limit the scope of the present disclosure. Some step(s) illustrated in FIG. 8 may be omitted depending on circumstances and/or settings. In addition, a base station in FIG. 8 is just one example, and may be implemented as the device illustrated in FIG. 10 below. For example, the processor (102/202) of FIG. 10 can control to transmit and receive channels/signals/data/information, etc. using the transceiver (106/206) and can also control to store transmitted or received channels/signals/information/data/information, etc. in the memory (104/204).

A base station transmits configuration information related to a PUCCH to a UE (S801).

Here, the configuration information may include information on a list of PUCCH resources for unicast SPS PDSCH reception(s) (see Table 6 above). As described above, the configuration information may include a list of PUCCH resource(s) (e.g., 1 to 4) for unicast SPS PDSCH reception(s) (see Table 7 and Table 8 above), and a maximum payload size may be defined/configured for each PUCCH resource(s) included in the list of the corresponding PUCCH resource(s). In addition, based on a size (number) of information bits of UCI including HARQ-ACK information and/or a maximum payload size for each PUCCH resource in the list of PUCCH resource(s), a PUCCH resource on which the corresponding UCI is to be transmitted in the list of the corresponding PUCCH resource(s) may be determined.

In addition, although not shown in FIG. 8, a base station can individually transmit configuration information related to a HARQ-ACK for a unicast PDSCH and configuration information related to a HARQ-ACK for a multicast PDSCH to a UE.

Configuration information related to a HARQ-ACK for a PDSCH may include information on a type of a HARQ-ACK codebook (e.g., type 1 HARQ-ACK codebook, type 2 HARQ-ACK codebook, type 3 HARQ-ACK codebook, etc.) configured by multiplexing HARQ-ACK information for a PDSCH. For example, if the higher layer parameter pdsch-HARQ-ACK-Codebook is set to semi-static, it may indicate a type 2 HARQ-ACK codebook. In addition, if the higher layer parameter pdsch-HARQ-ACK-Codebook is set to dynamic, it may indicate a type 2 HARQ-ACK codebook. In addition, if the higher layer parameter pdsch-HARQ-ACK-OneShotFeedback is set, it may indicate a type 3 HARQ-ACK codebook.

In addition, although not shown in FIG. 8, a base station may transmit SPS configuration information (e.g., SPS-Config) for unicast SPS PDSCH reception and/or multicast SPS/broadcast SPS PDSCH reception to a UE.

The SPS-Config IE is used to configure downlink semi-persistent transmission. For example, an SPS configuration for unicast SPS PDSCH reception can be configured in configuration information related to a downlink dedicated BWP (e.g., BWP-DownlinkDedicated) used to configure dedicated (UE specific) parameters of a downlink BWP. In addition, an SPS configuration for multicast SPS PDSCH reception can be configured in configuration information for a UE specific CFR for multicast (e.g., CFR-ConfigMulticast).

Here, multiple SPS configurations can be configured within one BWP of a serving cell, and the multiple SPS configurations can be identified by an SPS configuration index (e.g., sps-ConfigIndex). That is, an SPS configuration can be configured by all parameters within one SPS configuration information (e.g., SPS-Config) identified by an SPS configuration index (e.g., sps-ConfigIndex).

In addition, even if not shown in FIG. 8, a base station may transmit configuration information to a UE according to the method proposed above (e.g., one or a combination of Embodiments 1, 2 and detailed embodiments thereof).

The above-described configuration information may be transmitted via a higher layer message (e.g., an RRC message), and the higher layer message may be a group common message or a UE-dedicated message.

A base station transmits unicast SPS PDSCH(s) and multicast PDSCH(s) to a UE (S802).

Here, the multicast PDSCH(s) may be dynamic grant-based multicast PDSCH(s). That is, they may be scheduled by DCI, and in this case, although not shown in FIG. 8, a base station may transmit DCI scheduling multicast PDSCH(s) to a UE.

In addition, the multicast PDSCH(s) may be multicast SPS PDSCH(s). In this case, multicast SPS PDSCH(s) may be configured by higher layer signaling (e.g., see Table 9) as described above, and the corresponding transmission may be activated/released by DCI. In this case, although not shown in FIG. 8, a base station may transmit DCI activating multicast SPS PDSCH(s) to a UE.

A base station receives a PUCCH from a UE (S803).

Here, the PUCCH may include (carry) HARQ-ACK information associated with the unicast SPS PDSCH(s) (hereinafter referred to as first HARQ-ACK information) and/or HARQ-ACK information associated with the multicast PDSCH(s) (hereinafter referred to as second HARQ-ACK information). In addition, when multiplexed with other uplink control information (e.g., scheduling request, channel state information, etc.), the PUCCH may include (carry) UCI including first HARQ-ACK information and/or second HARQ-ACK information.

In addition, when the first HARQ-ACK information and the second HARQ-ACK information are reported within one slot (i.e., scheduled by a base station to be reported within the same slot), the first HARQ-ACK information and the second HARQ-ACK information may be multiplexed within the PUCCH. In addition, when the first HARQ-ACK information and the second HARQ-ACK information are multiplexed within the PUCCH, a PUCCH resource for the PUCCH can be determined from a list of PUCCH resources for unicast PDSCH transmission(s). In other words, in order to multiplex the first HARQ-ACK information and the second HARQ-ACK information within the PUCCH, a PUCCH resource for the PUCCH can be determined from a list of PUCCH resources for unicast PDSCH transmission(s).

If a total payload size including the first HARQ-ACK information and the second HARQ-ACK information (i.e., a total payload size of UCI) exceeds the maximum payload size for the determined PUCCH resource, the first HARQ-ACK information in the PUCCH may be included with priority over the second HARQ-ACK information. That is, the first HARQ-ACK information may be transmitted on the PUCCH with priority over the second HARQ-ACK information.

For example, if a total payload size including the first HARQ-ACK information and the second HARQ-ACK information (i.e., a total payload size of UCI) exceeds the maximum payload size for the determined PUCCH resource, all of the second HARQ-ACK information may be dropped. That is, only the first HARQ-ACK information may be transmitted on the PUCCH.

For another example, if a total payload size including the first HARQ-ACK information and the second HARQ-ACK information (i.e., a total payload size of UCI) exceeds the maximum payload size for the determined PUCCH resource, the first HARQ-ACK information is all included in the PUCCH, and the second HARQ-ACK information is included in the PUCCH only up to the maximum payload size, and the rest can be dropped. That is, the first HARQ-ACK information is all transmitted on the PUCCH, and the second HARQ-ACK information can be transmitted on the PUCCH only as much as possible considering the maximum payload size supported by the determined PUCCH resource.

In this case, for example, the second HARQ-ACK information may be included in the PUCCH in descending order from the most significant bit (MSB). In other words, among second HARQ-ACK information bits, the leftmost HARQ-ACK information bit may be sequentially included in the PUCCH, and when the maximum payload size supported by the determined PUCCH resource is reached, the remaining second HARQ-ACK information bits may be dropped.

In addition, for example, the second HARQ-ACK information may be included in the PUCCH in ascending order of a G-RNTI value or G-CS-RNTI value starting from the HARQ-ACK information for a multicast PDSCH associated with the lowest G-RNTI or G-GS-RNTI value. In other words, among second HARQ-ACK information bits, HARQ-ACK information bits for a multicast PDSCH associated with the lowest G-RNTI or G-GS-RNTI value are sequentially included in the PUCCH in ascending order of a G-RNTI value or G-CS-RNTI value, and when the maximum payload size supported by the determined PUCCH resource is reached, the remaining second HARQ-ACK information bits may be dropped.

In addition, for example, the second HARQ-ACK information may be included in the PUCCH in descending order of a G-RNTI value or G-CS-RNTI value starting from HARQ-ACK information for a multicast PDSCH associated with the highest G-RNTI or G-GS-RNTI value. In other words, among second HARQ-ACK information bits, HARQ-ACK information bits for a multicast PDSCH associated with the highest G-RNTI or G-GS-RNTI value are sequentially included in the PUCCH in descending order of a G-RNTI value or G-CS-RNTI value, and when the maximum payload size supported by the determined PUCCH resource is reached, the remaining second HARQ-ACK information bits may be dropped.

In addition, for example, the second HARQ-ACK information may be included in the PUCCH in reverse chronological order starting from HARQ-ACK information for the most recent multicast PDSCH. In other words, among second HARQ-ACK information bits, the HARQ-ACK information bits for the most recent multicast PDSCH may be included in the PUCCH in reverse chronological order, and when the maximum payload size supported by the determined PUCCH resource is reached, the remaining second HARQ-ACK information bits may be dropped.

In addition, for example, the second HARQ-ACK information may be included in the PUCCH in reverse chronological order starting from HARQ-ACK information for the earliest multicast PDSCH. In other words, among second HARQ-ACK information bits, the HARQ-ACK information bits for the earliest multicast PDSCH may be included in the PUCCH in chronological order, and when the maximum payload size supported by the determined PUCCH resource is reached, the remaining second HARQ-ACK information bits may be dropped.

Meanwhile, in order to multiplex the first HARQ-ACK information and the second HARQ-ACK information within the PUCCH, the PUCCH resource may be determined as a PUCCH resource that supports the largest maximum payload size in a list of PUCCH resources for unicast PDSCH transmission(s). In this case, transmission power of the PUCCH may be determined to be greater than when only the first HARQ-ACK is transmitted on the PUCCH resource.

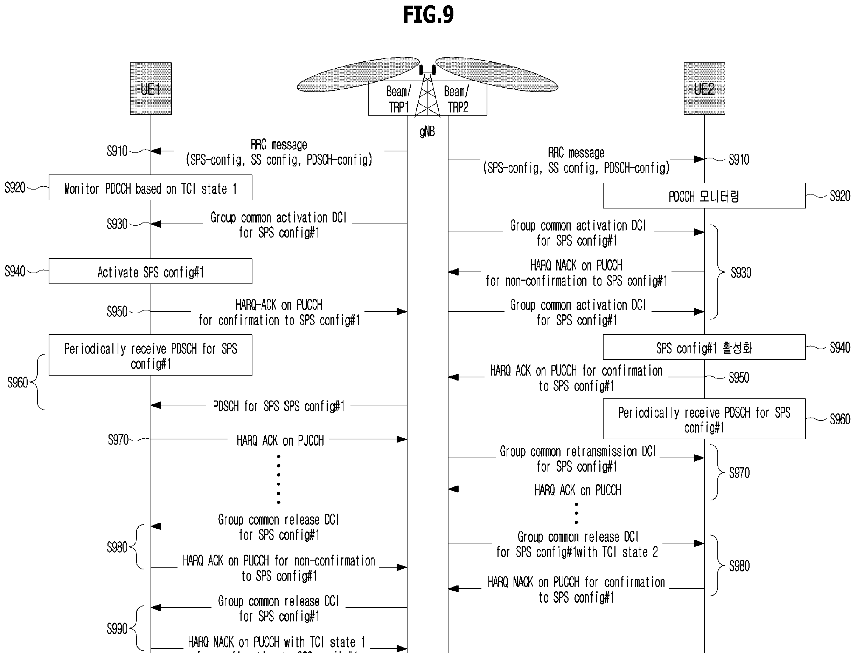

FIG. 9 is a diagram illustrating a signaling procedure between a network and a UE according to an embodiment of the present disclosure.

FIG. 9 shows an example of signaling between a network side and a terminal (UE) in an M-TRP environment (or S-TRP environment) to which embodiments (e.g., embodiments 1 to 9, or a combination of one or more of the detailed embodiments thereof) of the present disclosure described above may be applied.

Here, the UE/network side is exemplary, and may be replaced with various devices to be described with reference to FIG. 10. FIG. 9 is for convenience of description, and does not limit the scope of the present disclosure. Also, some step(s) shown in FIG. 9 may be omitted depending on circumstances and/or settings. In addition, in the operation of the network side/UE of FIG. 9, the above-described uplink transmission/reception operation and the like may be referred to or used.

In the following description, the network side may be one base station including a plurality of TRPs, or may be one cell including a plurality of TRPs. Alternatively, the network side may include a plurality of remote radio heads (RRHs)/remote radio units (RRUs). As an example, an ideal/non-ideal backhaul may be configured between TRP 1 and TRP 2 included in the network side. In addition, although the following description is based on a plurality of TRPs, such description may be equivalently extended and applied to transmission through a plurality of panels/cells, and may also be extended and applied to transmission through a plurality of RRHs/RRUs.

In addition, although described with reference to "TRP" in the following description, "TRP" may be replaced with and applied to a panel, an antenna array, a cell (e.g., a macro cell/small cell/pico cell, etc.), TP (transmission point), base station (base station, gNB, etc.) as described above. As described above, the TRP may be distinguished according to information (e.g., CORESET index, ID) on the CORESET group (or CORESET pool).

As an example, when one UE is configured to perform transmission and reception with a plurality of TRPs (or cells), this may mean that a plurality of CORESET groups (or CORESET pools) are configured for the one UE. The configuration of such CORESET group (or CORESET pool) may be performed through higher layer signaling (e.g., RRC signaling, etc.).

In addition, the base station may mean a generic term for an object that transmits/receives data to and from the UE. For example, the base station may be a concept including one or more TPs (Transmission Points), one or more TRPs (Transmission and Reception Points), or the like. In addition, the TP and/or TRP may include a panel, a transmission and reception unit, and the like of the base station.

The UE may enter the RRC_CONNECTED mode, and may report a message indicating one or more interested MBS services to the network side. Here, the message may be reported to the network side through at least one of Uplink Control Information (UCI), Control Element (MAC CE), and RRC messages.

The MBS service of interest on the message may indicate either TMGI or G-RNTI (Group Radio Network Temporary Identifier) listed in a DL message received from the network side. G-RNTI indicates the terminal group identifier for receiving the MBS.

For example, the DL message may be a service availability message listing TMGI #1, TMGI #3, TMGI #5, and TMGI #10. When the UE is interested in TMGI #5, the UE may indicate the order of TMGI #5 in the message. That is, the terminal may report '3' to the network side.

As an additional example, the DL message may be a service availability message listing G-RNTI #1, G-RNTI #3, G-RNTI #5, and G-RNTI #10. When the UE is interested in G-RNTI #10, the UE may indicate the order of G-RNTI #10 in the message. That is, the UE may report '4' to the network side.

The network side receiving the message may provide a common frequency resource (CFR) configuration, one or more group common SPS configuration including a TCI state, a search space configuration including a TCI state, and a GC(group common)-CS-RNTI value to the UE (e.g., UE 1 and UE 2) through the RRC message (S910). Upon receiving the RRC message, the UE may configure one or more group common SPS configurations according to the RRC message.

Here, the RRC message may be a group common message transmitted through a PTM MCCH (Multicast Control Channel) or a UE-dedicated message transmitted through a UE-specific DCCH (Dedicated Control Channel).

In addition, The UE may be configured with at least a G-RNTI value for each MBS CFR or each serving cell. GC-CS-RNTI may be configured/used for activation, retransmission or release of one or more group common SPS configurations.

For example, when the UE is not configured with GC-CS-RNTI for CFR or serving cell, and CS-RNTI is configured for CFR or serving cell, the UE may use CS-RNTI for activating, retransmitting, or releasing of one or more group common SPS configurations.

The network side may associate one GC-CS-RNTI value with a TMGI list or a G-RNTI list. In this case, the network side may provide a TMGI list or a G-RNTI list associated with the GC-CS-RNTI value.

Each group common SPS configuration (i.e., SPS-config) may be set as the following information element as shown in Table 9.

[Table 9]

```
SPS-Config ::= SEQUENCE {
periodicity ENUMERATED {ms10, ms20, ms32, ms40, ms64, ms80, ms128, ms160,
ms320, ms640,
spare6, spare5, spare4, spare3, spare2, spare1},
nrofHARQ-Processes INTEGER (1..8),
n1PUCCH-AN PUCCH-ResourceId OPTIONAL, -- Need M
mcs-Table ENUMERATED {qam64LowSE} OPTIONAL, - Need S
sps-ConfigIndex-r16 SPS-ConfigIndex-r16 OPTIONAL, - Cond SPS-List
harq-ProcID-Offset-r16 INTEGER (0..15) OPTIONAL, -- Need R
periodicityExt-r16 INTEGER (1..5120) OPTIONAL, - Need R
harq-CodebookID-r16 INTEGER (1..2) OPTIONAL, - Need R
pdsch-AggregationFactor-r16 ENUMERATED {n1, n2, n4, n8 } OPTIONAL -- Need S
tci-StatesToAddModList SEQUENCE (SIZE(1..maxNrofTCI-States)) OF TCI-State
OPTIONAL, -- Need N tci-StatesToReleaseList SEQUENCE (SIZE(1..maxNrofTCI-
States)) OF TCI-StateId OPTIONAL, - Need N
GC-CS-RNTI RNTI-Value OPTIONAL, - Need R
}
```

In table 9, 'harq-CodebookID' may indicate the corresponding HARQ-ACK codebook for the SPS PDSCH and the HARQ-ACK codebook index for the ACK for the SPS PDSCH release.

'harq-ProcID-offset' may indicate an offset used to derive the HARQ process ID.

'mcs-table' may indicate an MCS table to be used by the UE for DL SPS. If the 'mcs-table' field is present, the UE must use the MCS table of the low-SE 64QAM table. If the corresponding field does not exist, the field 'mcs-table' of the 'PDSCH-Config' is configured to 'qam256', and the format of the active DCI is 1_1, the UE may apply the 256QAM table. Otherwise, the UE may apply a non-low-SE 64QAM table.

'n1PUCCH-AN' may mean a HARQ resource for PUCCH for DL SPS. The network side may configure the resource in format 0 or format 1. The actual PUCCH-resource is set in 'PUCCH-Config' and may be referred to as an ID.

'nrofHARQ-process' may indicate the number of HARQ processes configured for SPS DL.

'pdsch-AggregationFactor' may indicate the number of repetitions of the SPS PDSCH. If there is no corresponding field, the UE may apply a PDSCH aggregation factor of 'PDSCH-Config'.

'periodicity' may indicate the period of the DL SPS.

'periodicityExt' may be used to calculate the periodicity of the DL SPS. If the corresponding field exists, the 'periodicity' field may be ignored.

The following cycle may be supported according to the configured SCS[ms].

15 kHz: 'periodicityExt', where 'periodityExt' may have a value between 1 and 640.

30kHz: 0.5 x 'periodicityExt', where 'periodicityExt' may have a value between 1 and 1280.

60kHz in normal CP: 0.25 x 'periodityExt', where 'periodityExt' may have a value between 1 and 2560.

60kHz (including ECP): 0.25 x 'periodityExt', where 'periodityExt' may have a value between 1 and 2560.

120kHz: 0.125 x 'periodityExt', where 'periodityExt' may have a value between 1 and 5120.

'sps-ConfigIndex' may indicate one index among multiple SPS configurations.

'tci-StatesToAdd Mod List' may indicate a TCI state list indicating a transmission configuration including a QCL relationship between a DL RS and a PDSCH DMRS port in one RS set.

'GC-CS-RNTI' may indicate a GC-CS-RNTI value associated with 'sps-ConfigIndex'. If the corresponding field does not exist and another GC-CS-RNTI value is configured for the CFR or serving cell related to 'sps-ConfigIndex', the UE may use a different GC-CS-RNTI value for 'sps-ConfigIndex'. If the corresponding field does not exist and no other GC-CS-RNTI value is configured for the serving cell or CFR related to 'sps-ConfigIndex', the UE may use the CS-RNTI value for 'sps-ConfigIndex'.

For example, one or more SPS configurations may be configured and associated with a TCI state list (e.g., 'tci-StatesToAdd Mod List' in 'SPS-config' for CFR). For one or more CFRs, different SPS configurations may be configured and associated with other 'tci-StatesToAddModList' in 'SPS-config'. If the group common SPS configuration is not configured to 'tci-StatesToAddModList' in 'SPS-config', the SPS configuration may be associated with 'tci-StatesToAdd-ModList' in 'PDSCH-config' of the CFR or the serving cell of the UE.

Here, when 'tci-StatesToAddModList' is not configured as the SPS configuration index in 'SPS-config', the SPS configuration index may be a UE-specific SPS configuration rather than a group common SPS configuration used for MBS. That is, if 'tci-StatesToAddModList' is not configuration as the SPS configuration index in 'SPS-config', the UE may consider that the SPS configuration is a UE-specific SPS configuration rather than a group common SPS configuration. If 'tci-StatesToAddModList' is configuration as an SPS configuration index in 'SPS-config', the UE may consider that the SPS configuration is a group common SPS configuration.

As another example, one or more TMGIs may be configured and associated with 'tci-StatesToAddModList'. If the SPS PDSCH transmission of the SPS configuration is mapped to the TMGI associated with 'tci-StatesToAddModList', the SPS PDSCH transmission of the SPS configuration may be associated with the 'tci-StatesToAdd Mod List'.

As another example, one or more G-RNTIs may be configured and associated with 'tci-StatesToAddModList'. When SPS PDSCH transmission of SPS configuration is mapped to MBS service of G-RNTI associated with 'tci-StatesToAddModList', SPS PDSCH transmission of SPS configuration may be associated with 'tci-StatesToAddModList'.

As another example, a value of GC-CS-RNTI or CS-RNTI may be configured and associated with 'tci-StatesToAddModList'. When the SPS configuration is mapped to a value of GC-CS-RNTI or CS-RNTI associated with 'tci-StatesToAddModList', the SPS configuration may be associated with 'tci-StatesToAdd Mod List'.

As another example, one SPS configuration may configured one or more HARQ process IDs up to 'nrofHARQ-Processes' (up to 'nrofHARQ-Processes'). The HARQ process ID may be associated with a slot from which DL SPS PDSCH transmission starts and is derived from one of Equations 3 and 4 below.

$$\text{HARQ process ID} = [\text{floor} (CURRENT\_slot \times 10 / (numberOfSlotsPerFrame \times periodicity))] \text{ modulo nrofHARQ-Processes} \qquad \text{[Equation 3]}$$

$$\text{HARQ process ID} = [\text{floor} (CURRENT\_slot \times 10 / (numberOfSlotsPerFrame \times periodicity))] \text{ modulo nrofHARQ-Processes + harq-ProcID-Offset} \qquad \text{[Equation 4]}$$

As another example, the UE may be configured separately with one or more UE-specific SPS configuations.

As option 2-1, both the UE-specific SPS configuration and the group common SPS configuration may share the 'sps-ConfigIndex' value. For example, 'sps-ConfigIndex' may be configured from 0 to 4 for five UE-specific SPS configurations, but 'sps-ConfigIndex' may be configured from 7 to 8 for two group common SPS configurations. In this case, 'sps-ConfigIndex' values 5 and 6 may not be used for the UE.

In the above option, upon receiving the DCI for the SPS configuration, the UE may determine whether the SPS configuration is group common or UE specific by checking the 'sps-ConfigIndex' value included in the DCI. In DCI, the value of 'sps-ConfigIndex' may be indicated by a HARQ process number field or a configuration index field of DCI.

As option 2-2, the UE-specific SPS configuration and the group common SPS configuration may have a separate space for the 'sps-ConfigIndex' value. For example, 'sps-ConfigIndex' may be configured from 0 to 4 for five UE-specific SPS configurations, but 'sps-ConfigIndex' may be configured from 0 to 1 for two group common SPS configurations.

In the above option, upon receiving the DCI for the SPS configuration, the UE may check one of the following 1) to 4) without checking the 'sps-ConfigIndex' value to determine whether the SPS configuration is group common or UE specific.

1) RNTI value used for CRC scrambling of DCI

For example, when the RNTI value corresponds to a specific value such as the GC-CS-RNTI value, the SPS configuration may be group common.

2) DCI format of DCI

For example, when the MBS-specific DCI format is used for DCI, the SPS configuration may be group common.

3) One or more DCI fields may indicate all '0' or all '1'.

For example, when one or more of 'MCS', 'ZP CSI-RS trigger', and 'SRS request' of DCI all indicate '0', validation of DCI format for activation of group common SPS configuration may be achieved.

4) HARQ process number

**[0311]** For example, one SPS configuration may configure multiple HARQ process numbers up to 'nrofHARQ-Processes'. The first set of HARQ process numbers (e.g., 0, 2, 4) may be used for UE-specific SPS transmission, and the second set of HARQ process numbers (e.g., 1, 3, 5) may be used for group common SPS transmission. The UE may consider that the DL SPS resource of the slot associated with the first set is used for UE-specific SPS transmission, while the DL SPS resource of the slot associated with the second set is used for group common SPS transmission.

Alternatively, one SPS configuration may configure several HARQ process numbers up to 'nrofHARQ-Processes'. The first set of HARQ process numbers (e.g. 0, 2, 4) may be used in the first set of TMGI(s) or G-RNTI(s), but the second set of HARQ process numbers (e.g., 1, 3, 5) may be used in the second set of TMGI(s) or G-RNTI(s). The UE may consider that the DL SPS resource in the slot associated with the HARQ process number of the first set is used for SPS transmission for the TMGI or G-RNTI of the first set, but the DL SPS resource in the slot associated with the HARQ process number of the second set may be used for SPS transmission for the TMGI or G-RNTI of the second set.

If the SPS configuration is configured for the configured CFR, the UE may monitor the PDCCH in the search space (SS) configured in the configured CFR to receive the DCI in which the CRC is scrambled with the GC-CS-RNTI for activation, retransmission, or release of the SPS configuration (S920).

In step S930, for activation, retransmission, or deactivation (release) of one of the SPS configurations, the network side may transmit DCI to the UE through the PDCCH. In this case, the UE may transmit a HARQ NACK on the PUCCH to the network side for non-confirmation of the SPS configuration, and the network side may transmit a DCI back to the UE.

Then, the UE may activate the SPS configuration (e.g., SPS configuration #1) (S940). Then, the UE may transmit a HARQ-ACK for confirmation of the SPS configuration (e.g., SPS configuration #1) to the network side on the PUCCH (S950).

Specifically, the CRC of DCI may be scrambled by GC-CS-RNTI or CS-RNTI. The PDCCH may include at least one of a group common PDCCH or a UE specific PDCCH.

HARQ feedback activation/deactivation for group common SPS configuration may be indicated by (re)activation, retransmission or release DCI of SPS configuration, group common MAC CE, or UE-specific MAC CE.

When HARQ-ACK feedback is enabled or disabled by DCI for activating or releasing SPS configuration, DCI may allocate retransmission resources for SPS configuration, group common MAC CE, or UE-specific MAC CE.

When the enabling / disabling indicator is present in DCI, upon receiving activation/release DCI enabling HARQ-ACK feedback, the UE may transmit a (non)-confirmation to the activation/deactivation DCI. That is, the network side may expect confirmation/non-confirmation transmitted by the UE.

If an enabling / disabling indicator is present in DCI, upon receiving the activation/release DCI disabling HARQ-ACK feedback, the UE may not transmit a non-acknowledgment to the activation/release DCI. That is, the network side may expect that no confirmation/non-confirmation is transmitted by the UE.

When ACK/NACK-based HARQ-ACK feedback is configured, when receiving DCI for activating or releasing SPS configuration, UE-specific confirmation for activation/release of SPS configuration may be transmitted by ACK/NACK of UCI.

Activation/deactivation of SPS configuration DCI and PUCCH resources indicated by 'SPS-config' may be used to transmit confirmation of activation/deactivation of SPS configuration.

The same or different PUCCH resources may be used for different SPS configurations for activation/release confirmation.

i. When the same PUCCH resource is used to check the activation/deactivation of other SPS configurations, a HARQ-ACK (sub) codebook may be configured based on the SPS configuration. Other bits of the HARQ-ACK (sub) codebook may indicate confirmation or non-acknowledgment of other SPS configurations.

When different SPS configurations belong to the same SPS group, 1 bit of the HARQ-ACK (sub) codebook may indicate confirmation or non-confirmation of different SPS configurations within the same SPS group.

ii. When different PUCCH resources are used to check activation/release of different SPS configurations, separate PUCCH resources may be used to check activation/release of each SPS configuration.

When different SPS configurations belong to the same SPS group, one PUCCH resource may indicate confirmation or non-confirmation of different SPS configurations within the same SPS group.

When PUCCH-based acknowledgment for activation/deactivation is multiplexed with multicast or unicast-specific HARQ-ACK feedback, activation/release confirmation for one or more SPS configurations may be multiplexed with general multicast-specific HARQ-ACK in the first bit(s) or last bit(s) of the multicast-specific HARQ-ACK (lower) codebook.

In response to the group common SPS (de)activation DCI, HARQ ACK for UCI may be interpreted as confirmation for activation, and HARQ NACK for UCI may be interpreted as confirmation for deactivation.

In case of group common SPS, when NACK-only HARQ-ACK feedback is configured, when receiving a DCI for activating or releasing the SPS configuration, a group common or UE-specific acknowledgment for the activation/release of the SPS configuration may be transmitted by the ACK/NACK of the UCI.

Activation/deactivation of SPS configuration DCI and PUCCH resources indicated by 'SPS-config' may be used to transmit confirmation of activation/deactivation of SPS configuration.

As option 4-1, if activation/deactivation DCI is confirmed, the UE may transmit NACK for a PUCCH resource dedicated to NACK. If activation/release DCI is not confirmed, the UE may not transmit NACK for a PUCCH resource dedicated to NACK.

As option 4-2, if activation/deactivation DCI is confirmed, the UE may transmit the first sequence through PUCCH. If activation/release DCI is not confirmed, the UE may not transmit PUCCH. Alternatively, the UE may transmit the second sequence on the PUCCH.

The first sequence may be associated with SPS configuration or activation/deactivation of SPS configuration. Different first sequences may be associated with different SPS configurations.

The second sequence may be associated with SPS configuration. Different second sequences may be associated with different SPS configurations.

As option 4-3, the UE may change from NACK-based HARQ-ACK feedback to ACK/NACK-based HARQ-ACK feedback (when activation/release DCI is confirmed). In addition, the UE may transmit an acknowledgment when the ACK/NACK-based HARQ-ACK feedback is configured.

The network side may repeatedly transmit DCI indicating the same 'sps-ConfigIndex' using the same GC-CS-RNTI for activation, retransmission, or deactivation of the SPS configuration. DCI may be repeatedly transmitted in multiple CORESETs with the same or different TCI state. The network side may transmit the same DCI N times in the M-TCI state for activation, retransmission, or deactivation. N and M may be configured by the network side.

For example, the first/second repetition of DCI is transmitted in CORESET with TCI state 1, the third/fourth repetition of DCI is transmitted on CORESET with TCI state 2, and (N-1) of DCI The th/Nth repetition may be transmitted through CORESET with TCI state M. The UE may select one or two TCI states and selectively receive corresponding repetitions of DCI in the CORESET associated with the selected TCI state(s).

When DCI repetitions are transmitted in the same TCI state, the UE may transmit PUCCH based on the last repeated DCI to confirm SPS activation/deactivation. When DCI repetitions are transmitted in different TCI states, the UE may selectively receive DCI repetition(s) and transmit PUCCH based on the last repeated DCI of the selected TCI state for confirmation of SPS activation/deactivation.

The DCI may include the fields for activation, retransmission or deactivation (i.e., release) of the SPS configuration:

- Identifier for DCI formats
  The identifier field for the DCI format may indicate either an MBS-specific DCI format or an existing DCI format for MBS.
- Carrier indicator
  The carrier indicator field may indicate a (serving or MBS specific) cell of the CFR or a serving cell of the active BWP of the UE associated with the CFR. Here, the group common PDCCH/PDSCH may be transmitted or the configured DL allocation of the SPS PDSCH may be allocated to the SPS configuration indicated by the DCI.
- BWP indicator
  The carrier indicator field may indicate the BWP ID assigned to the CFR or the BWP ID of the active BWP of the terminal associated with the CFR. Here, a group common PDCCH/PDSCH may be transmitted or a configured DL allocation of the SPS PDSCH may be allocated to the SPS configuration indicated by the DCI.
- frequency domain resource assignment
- time domain resource assignment
- VRB-PRB mapping
- PRB bundling size indicator
- rate matching indicator
- ZP CSI-RS trigger
- modulation and coding scheme
- new data indicator (NDI)

The NDI may be configured to 1 for retransmission for the SPS configuration indicated by the DCI. In addition, the NDI may be configured to 0 for activation or release (i.e., deactivation) for the SPS configuration indicated by the DCI.

- redundancy version
- HARQ process number
- downlink assignment index
- TPC command for scheduled PUCCH
- PUCCH resource indicator
- PDSCH-to-HARQ_feedback timing indicator
- antenna port(s)
- transmission configuration indicator
- SRS request
- DMRS sequence initialization
- priority indicator

The DCI (i.e., activation DCI) may indicate activation of a particular SPS configuration by using of the following options:

As option 4-1, for activation of the SPS configuration, the value of the HARQ process number field of the DCI format is the same value as provided by 'sps-ConfigIndex' of the SPS configuration, and may indicate activation of the SPS PDSCH configuration. When all RV fields for the DCI format are configured to '0', validation of the DCI format may be performed. If validity is confirmed after receiving the DCI, the UE may consider the information in the DCI format as valid activation of the DL SPS configuration. If validation is not performed, the UE may discard all information in the DCI format.

In option 4-1 above, the SPS configuration may support both a group common SPS by only GC-CS-RNTI, a UE-specific SPS by only CS-RNTI, or a group common SPS and UE-specific SPS with different HARQ process IDs or additional indications for 'group common' or 'UE-specific'.

In option 4-2, for activation of the SPS configuration, a DCI format configuration index field is added, and the configuration index field has the same value as provided by 'sps-ConfigIndex' of the SPS configuration and may indicate activation of the SPS PDSCH configuration. When the NDI fields for the DCI format are all configured to '0' (or all '1') and the RV fields for the DCI format are all configured to '0', validation of the DCI format may be achieved.

In the above option 4-2, the SPS configuration may support the group common SPS only when there is a configuration index field or support the UE-specific SPS only when there is no configuration index field.

When validation is achieved, the UE may consider the information in the DCI format as valid activation or valid release of DL SPS or configured UL grant type 2. If validation is not achieved, the UE may discard all information in DCI format.

For group common SPS, the network side, by group common or UE specific RRC message or by group common or UE specific MAC CE, may provide the UE with one or more of a service-resource mapping for an MBS service identified by TMGI or G-RNTI or GC-CS-RNTI. The data of the MBS service may be carried through the multicast traffic logical channel, that is, the MBS radio bearer (MRB) of the MTCH associated with the MBS service. The RRC message may be a group common message transmitted through a PTM multicast control channel (MCCH) or a UE-only message transmitted through a UE-specific dedicated control channel (DCCH).

If the group common DCI for the activation of the SPS configuration is not confirmed by the UE, that is, the network side cannot detect the PUCCH TX for confirmation for the active DCI or receives a non-confirmation from the UE, the network side may perform an operation according to options (options 5-1 to 5-3) to be described later.

As option 5-1, the network side may retransmit the group common DCI indicating activation of the SPS configuration until the active DCI is confirmed by the UE.

As option 5-1A, another UE that has already activated the SPS configuration may ignore the retransmitted activated DCI. That is, confirmation of the retransmitted active DCI may not be transmitted from another UE to the network side.

As option 5-1B, another UE that has already activated the SPS confirmation may re-transmit the confirmation of the retransmitted active DCI to the network side while receiving the SPS PDCCH/PDSCH transmission for the activated SPS configuration without re-activating the SPS configuration.

As option 5-1C, the other UE that has already activated the SPS confirmation may re-activate the SPS configuration (i.e., release and activate the SPS configuration) and re-transmit the confirmation to the retransmitted active DCI to the network side.

As option 5-2, the network side may provide the UE with a UE-specific DCI for activating the SPS configuration. DCI in which CRC is scrambled by UE-specific CS-RNTI or C-RNTI may indicate 'sps-ConfigIndex' of group common SPS configuration.

As option 5-3, the network side may (re)transmit the TB to the C-RNTI (i.e., PTP transmission) through the UE-specific PDSCH scheduled by DCI.

Here, the network side may retransmit a group common activated DCI (option 1) or a UE specific activated DCI (option 2). In this case, the network side may (re)transmit the TB(s) by PTP transmission until the retransmitted active DCI is confirmed by the UE.

When receiving the activation DCI indicating activation of the SPS configuration in the configured search space, the UE may activate the SPS configuration specified by 'sps-ConfigIndex'.

In addition, upon receiving the DCI, the UE may determine the MBS service(s) associated with one or more of a short ID, an MTCH ID, an MRB ID, a G-RNTI value, and a TMGI value for each SPS PDSCH occasion of the configured DL assignment, based on mapping between MBS services and the SPS configuration indicated in the DCI, mapping between MBS services and HPNs (HARQ Process Numbers) for the SPS configuration indicated in the DCI, and/or mapping between MBS services and, if available, short ID(s) indicated in the DCI.

Then, if UE is interested in the determined MBS service(s), UE may activate the SPS configuration based on the DCI indicating activation of the SPS configuration. If UE is not interested in the determined MBS service(s), UE may not activate the SPS configuration based on the DCI.

If the SPS configuration indicated by the activation DCI belongs to one SPS group which include other SPS configuration(s), upon the DCI indicating activation of the SPS configuration, UE may activate the other SPS configuration(s) belong to the same SPS group.

Alternatively, if the SPS configuration indicated by the activation DCI belongs to one SPS group which include other SPS configuration(s), upon the DCI indicating activation of the SPS configuration, UE may release the other SPS configuration that has been activated.

After activation of the SPS configuration, as shown in Equation 5 below, the UE may sequentially consider that the N-th DL allocation of the SPS PDSCH for the SPS configuration occurs in the slot.

$$(numberOfSlotsPerFrame \times SFN + slot\ number\ in\ the\ frame) = [(numberOfSlotsPerFrame \times SFNstart\ time + slotstart\ time) + N \times periodicity \times numberOfSlotsPerFrame / 10]\ modulo\ (1024 \times numberOfSlotsPerFrame) \qquad [Equation\ 5]$$

Here, the 'SFNstart' time and the 'slotstart' time may be the SFN and slot of the first transmission of the PDSCH in which the DL assignment configured for the SPS configuration was (re)initialized, respectively. The configured DL allocation may be configured as a set of periodic SPS PDSCH occasions for SPS configuration.

In the case of an SFN that is not aligned across the carriers of the cell group, the SFN of the serving cell of the active BWP of the UE related to the CFR may be used to calculate the occurrence of the configured DL assignment.

The DCI may also indicate one or more of a short ID, a MTCH ID, a MRB ID, a G-RNTI value and a TMGI value for activation of the SPS configuration.

If a data unit is available on a MTCH of a MRB for a MBS service, the base station may construct and transmit a TB including the data unit for a SPS PDSCH occasion associated to the MTCH of the MRB for the MBS service, or associated to TMGI of the MBS service, or associated to a short ID of the MBS service, or associated to G-RNTI mapped to the MBS service, according to the service-to-resource mapping.

If the SPS configuration has been activated by UE based on the interested MBS service, UE may periodically receive SPS PDSCH transmission occasions on the configured downlink assignment for the SPS configuration according to the above equation (S960). UE may consider the NDI to have been toggled for reception of each of the SPS PDSCH occasions.

For reception of a specific SPS PDSCH transmission occasion on the configured downlink assignment for the SPS configuration, UE may consider that the SPS PDCH transmission occasion is associated to MTCH, MRB, TMGI, G-RNTI and/or short ID of the MBS service based on mapping between MBS services and the SPS configuration, mapping between MBS services and HPNs (HARQ Process Numbers) for the SPS configuration, and/or mapping between MBS services and, if available, short ID(s), as indicated in the activation DCI or the retransmission DCI and/or configured by the RRC message.

In this regard, when group common SPS PDSCH(s) and unicast SPS PDSCH(s) are scheduled in the same DL slot, if the terminal is not capable of receiving all SPS PDSCHs, the terminal may select some SPS PDSCH(s) to receive based on the method(s) in Embodiment 8 described above.

Hereafter, as in the method in Embodiment 8 described above, the terminal may determine the PUCCH resource by considering only the HARQ-ACK(s) for the selected SPS PDSCH(s), and the terminal may construct/determine HARQ-ACK information bit(s) for HARQ-ACK(s) for the selected SPS PDSCH(s). In selecting some SPS PDSCH(s), when the terminal selects the group common SPS PDSCH(s), the terminal may prioritize multicast SPS PDSCH(s) over broadcast SPS PDSCH(s), regardless of the SPS configuration index for multicast/broadcast SPS PDSCH(s).

If decoding the TB on the SPS PDSCH transmission occasion is unsuccessful, the UE may transmit HARQ NACK to the base station on a PUCCH resource in the configured UL CFR according to PUCCH configuration of the SPS configuration received by the RRC message, and PUCCH resource indicator and PDSCH-to-HARQ_feedback timing indicator received by the DCI activating the SPS configuration.

By using the same PUCCH resource, the terminal may transmit HARQ-ACK for other PDSCH transmission, such as unicast transmission (S970).

In this case, the PUCCH resource for multiplexing unicast transmission (i.e., UE-specific data transmission) and/or multicast transmission (i.e., group common data transmission) may be determined as in the examples below based on the method(s) described above in the embodiments of the present disclosure.

For example, for multiplexing NACK only-based HARQ-ACKs for a plurality of group common SPS PDSCHs, if the PUCCH configuration for multicast is configured/provided in NACK only-based HARQ-ACK mode, the terminal may determine the PUCCH resource based on the sps-PUCCH-AN-List of the PUCCH configuration for multicast (e.g., see Table 7 above) (at this time, considering the method in Table 6 above). If PUCCH configuration for multicast is not configured/provided, PUCCH configuration for unicast may be used, and NACK only-based HARQ-ACKs may be transformed to ACK/NACK-based HARQ-ACKs.

As another example, for multiplexing NACK only-based HARQ-ACK(s) and SR for multiple group common SPS PDSCHs, regardless of whether the PUCCH configuration for multicast is configured/provided for NACK only-based HARQ-ACK mode, the terminal may determine the PUCCH resource based on the sps-PUCCH-AN-List of the PUCCH configuration for unicast (e.g., see Table 7 above) (at this time, considering the method in Table 6 above). In general, if the PUCCH configuration for multicast is configured/provided for ACK/NACK-based HARQ-ACK mode, the terminal may determine the PUCCH resource based on the sps-PUCCH-AN-List of the PUCCH configuration for multicast (e.g., see Table 7 above) (at this time, considering the method in Table 6 above).

As another example, for multiplexing NACK only based HARQ-ACK(s) and unicast SPS PDSCH (and SR) for group common SPS PDSCH, regardless of whether the PUCCH configuration for multicast is configured/provided for NACK only-based HARQ-ACK mode, the terminal may determine the PUCCH resource based on the sps-PUCCH-AN-List of the PUCCH configuration for unicast (e.g., see Table 7 above) (at this time, considering the method in Table 6 above). In general, if the PUCCH configuration for multicast is configured/provided for ACK/NACK-based HARQ-ACK mode, the terminal may determine the PUCCH resource based on the sps-PUCCH-AN-List of the PUCCH configuration for multicast (e.g., see Table 7 above) (at this time, considering the method in Table 6 above).

As another example, for multiplexing NACK only-based HARQ-ACK(s) for group common SPS PDSCH and ACK/NACK-based HARQ-ACK(s) for group common SPS PDSCH, the terminal may determine the PUCCH resource based on the sps-PUCCH-AN-List of the PUCCH configuration for multicast (e.g., see Table 7 above) (at this time, considering the method in Table 6 above). If PUCCH configuration for multicast is not configured/provided, the terminal may determine the PUCCH resource based on the sps-PUCCH-AN-List of the PUCCH configuration for unicast (e.g., see Table 7 above) (at this time, considering the method in Table 6 above).

As another example, for multiplexing NACK only-based HARQ-ACK(s) for group common SPS PDSCH and ACK/NACK-based HARQ-ACK(s) and SR for group common SPS PDSCH, the terminal may determine the PUCCH resource based on the sps-PUCCH-AN-List of the PUCCH configuration for unicast (e.g., see Table 7 above) (at this time, considering the method in Table 6 above).

In addition, in this regard, if the serving cell with the CFR configuration is in a deactivated state, the terminal may determine a set of $M_{A,c}$ occasions for configuring a Type 1 HARQ-ACK codebook (e.g., a set of $M_{A,c}$ occasions for candidate PDSCH receptions in clause 9.1.2.1 of 3GPP TS 38.213), based on the method(s) in Embodiments 9 described above.

In addition, according to the embodiment of the present disclosure described above, when HARQ-ACKs for unicast SPS PDSCH(s) and multicast (SPS or dynamic grant) PDSCH(s) (configured with ACK/NACK-based feedback) are multiplexed on the same PUCCH (i.e., PUCCH resource) for the same priority case, a PUCCH carrying the multiplexed HARQ-ACK can be determined from a list of SPS PUCCH resources for unicast (e.g., SPS-PUCCH-AN-List).

In this case, when a total payload size (i.e., total payload size of UCI) including the first HARQ-ACK information associated with unicast SPS PDSCH(s) and the second HARQ-ACK information associated with multicast (SPS or dynamic grant) PDSCH(s) exceeds the maximum payload size for the determined PUCCH resource, the first HARQ-ACK information in the PUCCH may be included with priority over the second HARQ-ACK information. That is, the first HARQ-ACK information may be transmitted on the PUCCH with priority over the second HARQ-ACK information.

For example, when a total payload size including the first HARQ-ACK information and the second HARQ-ACK information (i.e., a total payload size of UCI) exceeds the maximum payload size for the determined PUCCH resource, all of the second HARQ-ACK information may be dropped.

For another example, when a total payload size including the first HARQ-ACK information and the second HARQ-ACK information (i.e., a total payload size of UCI) exceeds the maximum payload size for the determined PUCCH resource, all of the first HARQ-ACK information may be included in the PUCCH, and the second HARQ-ACK information may be included in the PUCCH only up to the maximum payload size, and the remainder may be dropped.

In this case, for example, the second HARQ-ACK information may be included in the PUCCH in descending order from the most significant bit (MSB). In addition, for example, the second HARQ-ACK information may be included in the PUCCH in ascending order of G-RNTI values or G-CS-RNTI values starting from HARQ-ACK information for a multicast PDSCH associated with the lowest G-RNTI or G-GS-RNTI value. In addition, for example, the second HARQ-ACK information may be included in the PUCCH in descending order of G-RNTI values or G-CS-RNTI values starting from HARQ-ACK information for a multicast PDSCH associated with the highest G-RNTI or G-GS-RNTI value. In addition, for example, the second HARQ-ACK information may be included in the PUCCH in reverse chronological order starting from HARQ-ACK information for the most recent multicast PDSCH. Additionally, for example, the second HARQ-ACK information may be included in the PUCCH in reverse chronological order starting from HARQ-ACK information for the earliest multicast PDSCH.

Upon receiving the HARQ-ACK(s) based on the TCI state, the network side may transmit the PDCCH and the PDSCH together based on TCI state in the DL CFR configured for retransmission of the TB. The UE may monitor the group common and/or UE-specific PDCCH with the TCI state for the search space configured in the DL CFR in order to receive the retransmission of the TB.

The PDCCH for allocating retransmission resources for SPS configuration may be a group common PDCCH or a UE-specific PDCCH regardless of whether the SPS configuration is activated by a group common PDCCH or a UE-specific PDCCH.

For example, after activating the SPS configuration for a group of UEs, the network side may retransmit the TB of the SPS configuration by only one of the UEs of the group by the UE-specific PDCCH, but other UEs may not receive the retransmission of the TB for the SPS (because the TB was successfully received).

For retransmission of the activated SPS configuration, the network side may transmit DCI to the UE through the PDCCH. The CRC of DCI may be scrambled to one of GC-CS-RNTI, CS-RNTI, G-RNTI and C-RNTI.

In order to decode the TB when transmitting the SPS PDSCH, the UE may consider that the TB is associated with the short ID of the MTCH, MRB, TMGI, G-RNTI and/or MBS service, based on the mapping between the MBS service and the SPS configuration, the mapping between the MBS service and the HPN (HARQ process number) for the SPS configuration, and/or the mapping between the MBS services, and the short ID(s) indicated in the DCI if available.

Upon receiving the PDCCH for retransmission of the TB, the UE may receive the PDSCH scheduled by the DCI of the PDCCH.

Upon successful decoding of the TB on the PDSCH, the UE, as indicated in the activation DCI or retransmission DCI and/or as set by the RRC message, based on the mapping between MBS services and SPS configurations, between MBS services and HARQ process numbers (HPNs) for SPS configurations, and/or between MBS services; If possible, the decoded TB may be considered to be associated with the MTCH, MRB, TMGI, G-RNTI and/or short ID of the MBS service.

If TB decoding in the SPS PDSCH transmission opportunity is successful, the UE may transmit HARQ ACK(s) to the network side, through the PUCCH configuration of the SPS configuration received by the RRC message, and the PUCCH resource indicator received by the retransmission DCI, and the PUCCH resource of the UL CFR configured according to the 'PDSCH-to-HARQ_feedback' timing indicator.

Here, the PUCCH resource for the corresponding HARQ ACK(s) may be determined based on the PUCCH resource determination methods according to the embodiments described above in the present disclosure.

When the network side changes the mapping between the MBS service and the SPS configuration, the mapping between the MBS service and the HPN (HARQ process number) for the SPS configuration, and/or the mapping between the MBS services, short ID(s) if possible, indicated by the network side on the activation DCI or retransmission DCI and/or configured by the RRC message, the network side may re-activate the SPS configuration.

For example, if the SPS configuration is activated for the first MBS service by transmitting an activation DCI indicating the first MBS service, and the network side changes the SPS configuration mapping from the first MBS service to the second MBS service, the network side may reactivate the SPS configuration by transmitting an activation DCI indicating the second MBS service. For example, the reactivation DCI may indicate a short ID associated with the second MBS service or a G-RNTI/TMGI of the second MBS service. Upon receiving the reactivation DCI, the UE may consider that the SPS configuration is remapped to the second MBS service (and not mapped to the first MBS service).

For example, when the SPS configuration is activated for the first MBS service by transmitting an activation DCI indicating the first MBS service, and the network side adds the mapping of the second MBS service to the SPS configuration in addition to the first MBS service, the network side may reactivate the SPS configuration by transmitting an activation DCI indicating the second MBS service. For example, the reactivation DCI may indicate a short ID associated with the second MBS service or a G-RNTI/TMGI of the second MBS service. Upon receiving the reactivation DCI, the UE may consider that the SPS configuration is mapped not only to the first MBS service but also to the second MBS service.

If the PDCCH/PDSCH of the activated SPS configuration collides with other transmission/reception, the high priority of the PDCCH/PDSCH of the activated SPS configuration may ignore other transmission/reception, and other transmission/reception may ignore the low priority of the PDCCH/PDSCH of the activated SPS configuration.

If the PUCCH/PUSCH for the activated SPS configuration collides with other transmission and reception, the high priority of PUCCH/PUSCH of the activated SPS configuration may ignore other transmission/reception, and other transmission/reception may ignore the low priority of PUCCH/PUSCH of the activated SPS configuration.

The priority may be determined as follows.

As option 15-1, activation or retransmission or release DCI with GC-CS-RNTI or CS-RNTI may indicate high priority or low priority for SPS configuration.

As option 15-2, a high priority or a low priority may be set for each SPS configuration by the RRC.

As option 15-3, for each RNTI value used to activate the SPS configuration by the RRC, a high priority or a low priority may be configured. The RNTI may be one of G-RNTI, CS-RNTI and GC-CS-RNTI.

For deactivation of the SPS configuration, the network side may transmit DCI to the UE through the PDCCH. CRC of DCI may be scrambled by GC-CS-RNTI or CS-RNTI. The PDCCH for DCI indicating deactivation of the SPS configuration may be a group common PDCCH or a UE specific PDCCH regardless of whether the SPS configuration is activated by a group common PDCCH or a UE specific PDCCH.

For example, after activating the SPS configuration for the UE group, the network side may deactivate the SPS configuration for only one of the UEs of the group by the UE-specific PDCCH, and the other UE may still activate the SPS configuration.

Deactivation/Release DCI may indicate deactivation/release of SPS configurations using the following options.

As option 17-1, when 'sps-ConfigDeactivationStateList' is provided to the UE, the HARQ process number field value of the DCI format may indicate a corresponding entry for de-scheduling of one or more SPS PDSCH configurations.

As option 17-2, if 'sps-ConfigDeactivationStateList' is not provided to the UE, the value of the HARQ process number field of the DCI format may indicate the configuration of the SPS PDSCH having the same value provided by each of 'ConfiguredGrantConfigIndex' or 'sps-ConfigIndex' or release of the corresponding UL grant type 2 PUSCH.

If the group common DCI for the release of the SPS configuration is not confirmed by the UE, that is, the network side cannot detect the PUCCH TX for confirmation for the release DCI or receives a non-confirmation, it may operate like option 17A or option 17B, which will be described later.

As option 17A, the network side may retransmit the group common DCI indicating the release of the SPS configuration until the release DCI is confirmed by the UE.

As option 17A-1, another UE that has already released the SPS configuration may ignore the retransmitted release DCI. That is, the confirmation for the retransmitted release DCI may not be transmitted.

As option 17A-2, the other UE that has already released the SPS confirmation may re-transmit the confirmation for the retransmitted release DCI to the network side while the SPS configuration is released, without releasing the SPS configuration again.

As option 17B, the network side may provide the UE with a UE-specific DCI for releasing the SPS configuration. DCI in which CRC is scrambled by UE-specific CS-RNTI or C-RNTI may indicate 'sps-ConfigIndex' of group common SPS configuration.

In step S980, The network side may transmit deactivation/release DCI for the activated SPS configuration (e.g., SPS configuration #1) to the UE, and the UE may transmit a HARQ-ACK (or HARQ-NACK) for non-confirmation (or confirmation) of the SPS configuration (e.g., SPS configuration #1) on the PUCCH to the network side.

And, in step S990, when the UE transmits the HARQ-ACK for non-confirmation of the SPS configuration (e.g., SPS configuration #1) on the PUCCH to the network side, the network side may again transmit the deactivation/release DCI for the SPS configuration (e.g., SPS configuration #1) to the UE, and the UE may transmit a HARQ-NACK for confirmation of the SPS configuration (e.g., SPS configuration #1) to the network side on the PUCCH having the TCI state 1.

Specifically, upon receiving the deactivation/release DCI for the activated SPS configuration, the UE may deactivate/release the SPS configuration and all configurations related to the SPS configuration.

If the SPS configuration indicated by the release DCI belongs to one SPS group including other SPS configuration(s), according to the DCI instructing release of the SPS configuration, the UE may release other SPS configuration(s) belonging to the same SPS group.

Alternatively, if the SPS configuration indicated by the release DCI belongs to one SPS group including other SPS configuration(s), upon receiving the DCI indicating release of the SPS configuration, the UE may activate another activated SPS configuration.

General Device to which the Present Disclosure may be applied

FIG. 10 is a diagram which illustrates a block diagram of a wireless communication device according to an embodiment of the present disclosure.

In reference to FIG. 10, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Availability]

A method proposed by the present disclosure is mainly described based on an example applied to 3GPP LTE/LTE-A, 5G system, but may be applied to various wireless communication systems other than the 3GPP LTE/LTE-A, 5G system.

## Claims

1. A method performed by a user equipment (UE) in a wireless communication system, the method comprising:

   receiving, from a base station, configuration information related to a PUCCH (physical uplink control channel), wherein the configuration information includes information on a list of PUCCH resources for unicast semi-persistent scheduling (SPS) physical downlink shared channels (PDSCHs);
   receiving, from the base station, the unicast SPS PDSCHs and multicast PDSCHs; and
   transmitting the PUCCH to the base station,
   wherein based on first HARQ (hybrid automatic repeat request)-ACK (acknowledgement) information associated with the unicast SPS PDSCHs and second HARQ-ACK information associated with the multicast PDSCHs being reported within one slot, a PUCCH resource for the PUCCH is determined from the list of PUCCH resources to multiplex the first HARQ-ACK information and the second HARQ-ACK information within the PUCCH, and
   wherein based on a total payload size including the first HARQ-ACK information and the second HARQ-ACK information exceeding a maximum payload size for the PUCCH resource, the first HARQ-ACK information is included in the PUCCH with priority over the second HARQ-ACK information.

2. The method of claim 1, wherein based on the total payload size including the first HARQ-ACK information and the second HARQ-ACK information exceeding the maximum payload size for the PUCCH resource, all of the second HARQ-ACK information is dropped.

3. The method of claim 1, wherein based on the total payload size including the first HARQ-ACK information and the second HARQ-ACK information exceeding the maximum payload size for the PUCCH resource, the first HARQ-ACK information is all included in the PUCCH, and the second HARQ-ACK information is included in the PUCCH only up to the maximum payload size and the rest is dropped.

4. The method of claim 3, wherein the second HARQ-ACK information is included in the PUCCH in descending order from a most significant bit (MSB).

5. The method of claim 3, wherein the second HARQ-ACK information is included in the PUCCH in ascending order of a G-RNTI (group radio network temporary identifier) value or a G-CS-RNTI (group-configured scheduling-RNTI) value, starting from HARQ-ACK information for a multicast PDSCH associated with a lowest G-RNTI or G-GS-RNTI value.

6. The method of claim 3, wherein the second HARQ-ACK information is included in the PUCCH in descending order of a G-RNTI value or a G-CS-RNTI value, starting from HARQ-ACK information for a multicast PDSCH associated with a highest G-RNTI or G-GS-RNTI value.

7. The method of claim 3, wherein the second HARQ-ACK information is included in the PUCCH in reverse chronological order starting from HARQ-ACK information for a most recently received multicast PDSCH.

8. The method of claim 3, wherein the second HARQ-ACK information is included in the PUCCH in chronological order starting from HARQ-ACK information for an earliest received multicast PDSCH.

9. The method of claim 1, wherein the PUCCH resource is determined as a PUCCH resource that supports a largest maximum payload size in the list of PUCCH resources, and
wherein a transmission power of the PUCCH is determined to be greater than when only the first HARQ-ACK is transmitted on the PUCCH resource.

10. A user equipment (UE) operating in a wireless communication system, the UE comprising:

at least one transceiver for transmitting and receiving a wireless signal; and
at least one processor for controlling the at least one transceiver,
wherein the at least one processor configured to:

receive, from a base station, configuration information related to a PUCCH (physical uplink control channel), wherein the configuration information includes information on a list of PUCCH resources for unicast semi-persistent scheduling (SPS) physical downlink shared channels (PDSCHs);
receive, from the base station, the unicast SPS PDSCHs and multicast PDSCHs; and
transmit the PUCCH to the base station,
wherein based on first HARQ (hybrid automatic repeat request)-ACK (acknowledgement) information associated with the unicast SPS PDSCHs and second HARQ-ACK information associated with the multicast PDSCHs being reported within one slot, a PUCCH resource for the PUCCH is determined from the list of PUCCH resources to multiplex the first HARQ-ACK information and the second HARQ-ACK information within the PUCCH, and
wherein based on a total payload size including the first HARQ-ACK information and the second HARQ-ACK information exceeding a maximum payload size for the PUCCH resource, the first HARQ-ACK information is included in the PUCCH with priority over the second HARQ-ACK information.

11. At least one non-transitory computer-readable medium storing at least one instruction, wherein the at least one instruction executable by at least one processor controls a user equipment (UE) to:

receive, from a base station, configuration information related to a PUCCH (physical uplink control channel), wherein the configuration information includes information on a list of PUCCH resources for unicast semi-persistent scheduling (SPS) physical downlink shared channels (PDSCHs);
receive, from the base station, the unicast SPS PDSCHs and multicast PDSCHs; and
transmit the PUCCH to the base station,
wherein based on first HARQ (hybrid automatic repeat request)-ACK (acknowledgement) information associated with the unicast SPS PDSCHs and second HARQ-ACK information associated with the multicast PDSCHs being reported within one slot, a PUCCH resource for the PUCCH is determined from the list of PUCCH resources to multiplex the first HARQ-ACK information and the second HARQ-ACK information within the PUCCH, and
wherein based on a total payload size including the first HARQ-ACK information and the second HARQ-ACK information exceeding a maximum payload size for the PUCCH resource, the first HARQ-ACK information is included in the PUCCH with priority over the second HARQ-ACK information.

12. A processing apparatus configured to control a user equipment (UE) in a wireless communication system, the processing apparatus comprising:

at least one processor; and
at least one computer memory operably connected to the at least one processor and storing instructions that, based on being executed by the at least one processor, perform operations comprising:

receiving, from a base station, configuration information related to a PUCCH (physical uplink control channel), wherein the configuration information includes information on a list of PUCCH resources for unicast semi-persistent scheduling (SPS) physical downlink shared channels (PDSCHs);
receiving, from the base station, the unicast SPS PDSCHs and multicast PDSCHs; and
transmitting the PUCCH to the base station,
wherein based on first HARQ (hybrid automatic repeat request)-ACK (acknowledgement) information associated with the unicast SPS PDSCHs and second HARQ-ACK information associated with the multicast PDSCHs being reported within one slot, a PUCCH resource for the PUCCH is determined from the list of PUCCH resources to multiplex the first HARQ-ACK information and the second HARQ-ACK information within the PUCCH, and

wherein based on a total payload size including the first HARQ-ACK information and the second HARQ-ACK information exceeding a maximum payload size for the PUCCH resource, the first HARQ-ACK information is included in the PUCCH with priority over the second HARQ-ACK information.

13. A method performed by a base station in a wireless communication system, the method comprising:

transmitting, to a user equipment (UE), configuration information related to a PUCCH (physical uplink control channel), wherein the configuration information includes information on a list of PUCCH resources for unicast semi-persistent scheduling (SPS) physical downlink shared channels (PDSCHs);

transmitting, to the UE, the unicast SPS PDSCHs and multicast PDSCHs; and

receiving the PUCCH to the UE,

wherein based on first HARQ (hybrid automatic repeat request)-ACK (acknowledgement) information associated with the unicast SPS PDSCHs and second HARQ-ACK information associated with the multicast PDSCHs being reported within one slot, a PUCCH resource for the PUCCH is determined from the list of PUCCH resources to multiplex the first HARQ-ACK information and the second HARQ-ACK information within the PUCCH, and

wherein based on a total payload size including the first HARQ-ACK information and the second HARQ-ACK information exceeding a maximum payload size for the PUCCH resource, the first HARQ-ACK information is included in the PUCCH with priority over the second HARQ-ACK information.

14. A base station operating in a wireless communication system, the base station comprising:

at least one transceiver for transmitting and receiving a wireless signal; and

at least one processor for controlling the at least one transceiver,

wherein the at least one processor configured to:

transmit, to a user equipment (UE), configuration information related to a PUCCH (physical uplink control channel), wherein the configuration information includes information on a list of PUCCH resources for unicast semi-persistent scheduling (SPS) physical downlink shared channels (PDSCHs);

transmit, to the UE, the unicast SPS PDSCHs and multicast PDSCHs; and

receive the PUCCH to the UE,

wherein based on first HARQ (hybrid automatic repeat request)-ACK (acknowledgement) information associated with the unicast SPS PDSCHs and second HARQ-ACK information associated with the multicast PDSCHs being reported within one slot, a PUCCH resource for the PUCCH is determined from the list of PUCCH resources to multiplex the first HARQ-ACK information and the second HARQ-ACK information within the PUCCH, and

wherein based on a total payload size including the first HARQ-ACK information and the second HARQ-ACK information exceeding a maximum payload size for the PUCCH resource, the first HARQ-ACK information is included in the PUCCH with priority over the second HARQ-ACK information.

# FIG.1

# FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends on subcarrier spacing

Mini-Slot (URLLC)

Mini-Slot={2,4,7} Symbols

# FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^{\mu} - 1$

# FIG.4

# FIG.5

# FIG.6

INITIAL CELL SEARCH

SYSTEM INFORMATION RECEPTION

RANDOM ACCESS PROCEDURE

GENERAL DL/UL Tx/Rx

PSS/SSS& [DLRS]& PBCH

PDCCH/ PDSCH (BCCH)

PRACH

PDCCH/ PDSCH

PUSCH

PDCCH/ PDSCH

PDCCH/ PDSCH

PUSCH/ PUCCH

S601

S602

S603

S604

S605

S606

S607

S608

· DL/UL ACK/NACK
· UE CQI/PMI RI REPORT
  USING PUSCH AND PUCCH

EP 4 478 638 A1

## FIG.7

| Receive configuration information related to a PUCCH | ~ S701 |

↓

| Receive unicast SPS PDSCH(s) and multicast PDSCH(s) | ~ S702 |

↓

| Transmit a PUCCH | ~ S703 |

## FIG.8

| Transmit configuration information related to a PUCCH | ~ S801 |

↓

| Transmit unicast SPS PDSCH(s) and multicast PDSCH(s) | ~ S802 |

↓

| Receive a PUCCH | ~ S803 |

# FIG.9

EP 4 478 638 A1

**FIG.10**

First Device 100, Processor(s) 102, Memory(s) 104, Transceiver(s) 106, 108

Second Device 200, Processor(s) 202, Memory(s) 204, Transceiver(s) 206, 208

## INTERNATIONAL SEARCH REPORT

| | International application No. |
|---|---|
| | **PCT/KR2023/001991** |

**A.    CLASSIFICATION OF SUBJECT MATTER**

**H04L 1/18**(2006.01)i; **H04L 5/00**(2006.01)i; **H04W 72/21**(2023.01)i; **H04W 72/23**(2023.01)i; **H04W 4/06**(2009.01)i

According to International Patent Classification (IPC) or to both national classification and IPC

**B.    FIELDS SEARCHED**

Minimum documentation searched (classification system followed by classification symbols)

H04L 1/18(2006.01); H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: HARQ-ACK, 유니캐스트(unicast), 멀티캐스트(multicast), 다중화(multiplexing)

**C.    DOCUMENTS CONSIDERED TO BE RELEVANT**

| Category* | Citation of document, with indication, where appropriate, of the relevant passages | Relevant to claim No. |
|---|---|---|
| X<br>A | MODERATOR (HUAWEI). FL summary#2 on improving reliability for MBS for RRC_CONNECTED UEs. R1-2200718, 3GPP TSG RAN WG1 Meeting #107bis-e. 25 January 2022.<br>See sections 2.1.2.1, 5.2 and 5.2.1. | 1-3,10-14<br>4-9 |
| A | SAMSUNG. Remaining issues on mechanisms to improve reliability. R1-2200214, 3GPP TSG RAN WG1 Meeting #107bis-e. 11 January 2022.<br>See section 2.8. | 1-14 |
| A | LG ELECTRONICS INC. Mechanisms to improve Reliability of Broadcast/Multicast service. R1-2200579, 3GPP TSG RAN WG1 Meeting #107bis-e. 11 January 2022.<br>See section 4. | 1-14 |
| A | VIVO. Remaining issues on mechanisms to improve reliability for RRC_CONNECTED UEs. R1-2200095, 3GPP TSG RAN WG1 Meeting #107bis-e. 11 January 2022.<br>See section 2. | 1-14 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 May 2023** | **12 May 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| | International application No. |
|---|---|
| | **PCT/KR2023/001991** |

**C.      DOCUMENTS CONSIDERED TO BE RELEVANT**

| Category* | Citation of document, with indication, where appropriate, of the relevant passages | Relevant to claim No. |
|---|---|---|
| A | CN 113556216 A (DATANG MOBILE COMMUNICATIONS EQUIPMENT CO., LTD.) 26 October 2021 (2021-10-26)<br>       See paragraphs [0005]-[0021]; and claims 1-29. | 1-14 |

Form PCT/ISA/210 (second sheet) (July 2022)

INTERNATIONAL SEARCH REPORT
Information on patent family members

International application No.

**PCT/KR2023/001991**

| Patent document cited in search report | | | Publication date (day/month/year) | Patent family member(s) | | | Publication date (day/month/year) |
|---|---|---|---|---|---|---|---|
| CN | 113556216 | A | 26 October 2021 | BR | 112022021437 | A2 | 13 December 2022 |
| | | | | CN | 111510088 | A | 07 August 2020 |
| | | | | CN | 111609561 | A | 01 September 2020 |
| | | | | CN | 111609561 | B | 28 October 2022 |
| | | | | EP | 4141342 | A1 | 01 March 2023 |
| | | | | EP | 4142193 | A1 | 01 March 2023 |
| | | | | US | 2021-0336589 | A1 | 28 October 2021 |
| | | | | WO | 2021-212727 | A1 | 28 October 2021 |
| | | | | WO | 2021-212823 | A1 | 28 October 2021 |
| | | | | WO | 2021-212956 | A1 | 28 October 2021 |
| | | | | WO | 2021-213203 | A1 | 28 October 2021 |
| | | | | WO | 2021-215886 | A1 | 28 October 2021 |

Form PCT/ISA/210 (patent family annex) (July 2022)